# EUROPEAN PATENT APPLICATION

(11) **EP 3 675 547 A1**
(43) Date of publication of application: **01.07.2020**
(21) Application number: 18847881.2
(22) Date of filing: 20.08.2018
(51) Int. Cl.: H04W 16/18

(54) **BASE STATION DEPLOYMENT METHOD AND DEVICE**

(30) Priority: 23.08.2017 CN 201710729504
(71) Applicant: ZTE Corporation, Shenzhen, Guangdong 518057 (CN)
(72) Inventor: ZHU, Yongjun, Shenzhen Guangdong 518057 (CN); HUANG, Ping, Shenzhen Guangdong 518057 (CN); FAN, Xiaoli, Shenzhen Guangdong 518057 (CN); YU, Liying, Shenzhen Guangdong 518057 (CN); ZOU, Guangling, Shenzhen Guangdong 518057 (CN)
(74) Representative: Baudler, Ron
(86) International application number: PCT/CN2018/101324
(87) International publication number: WO 2019/037683

(57) **Abstract**

Provided by the embodiments of the present disclosure are a base station deployment method and apparatus, the method including: obtaining deployment parameters for base station deployment and measurement report data sent from a terminal; obtaining a weak coverage region according to the measurement report data; classifying the weak coverage region to obtain a type of the weak coverage region; and performing base station deployment on the weak coverage region according to the type of the weak coverage region, a preset correspondence relationship between the type of the weak coverage region and the type of the base station, and the deployment parameters.

## Description

### TECHNICAL FIELD

The present disclosure relates to, but is not limited to, the field of mobile communication technologies, and in particular, to a base station deployment method and device.

### BACKGROUND

In the 2G, 3G or 4G wireless network, measurement report (MR) data reported from a user may be analyzed by means of a big data platform to obtain a weak coverage region, and to judge whether weak coverage occurs indoors or outdoors. To eliminate weak coverage, a network planning engineer may add new macro stations as well as outdoor and indoor micro stations in these regions. The type, location and number of sites of the stations to be deployed are determined according to a size of the weak coverage region and the scenario characteristics (residential area, commercial area, hotel, etc.,) and other factors. If the deployment is done completely manually by the engineer, the efficiency may be extremely decreased and the deployment will be heavily dependent on individual experience of the engineer, which cannot ensure accurate execution of the deployment scheme.

### SUMMARY

In order to solve the above technical problem, in an embodiment of the present disclosure, there is provided a base station deployment method and apparatus.

According to an aspect of the embodiment of the present disclosure, there is provided a base station deployment method, including: obtaining deployment parameters for base station deployment and measurement report data sent from a terminal; obtaining a weak coverage region according to the measurement report data; classifying the weak coverage region to obtain a type of the weak coverage region; and performing base station deployment on the weak coverage region according to the type of the weak coverage region, a preset correspondence relationship between the type of the weak coverage region and the type of the base station, and the deployment parameters.

According to another aspect of the embodiment of the present disclosure, there is further provided a base station deployment apparatus, including: an obtaining module configured to obtain deployment parameters for base station deployment and measurement report data sent from a terminal; a calculation module configured to obtain a weak coverage region according to the measurement report data; a classification module configured to classify the weak coverage region to obtain a type of the weak coverage region; and a deployment module configured to perform base station deployment on the weak coverage region according to the type of the weak coverage region, a preset correspondence relationship between the type of the weak coverage region and the type of the base station, and the deployment parameters.

According to yet another aspect of the embodiment of the present disclosure, there is further provided a base station deployment device, including: a memory, a processor, and a computer program stored in the memory and executable on the processor, the processor executing the computer program to implement steps of the base station deployment method as described above.

According to still another aspect of the embodiment of the present disclosure, there is further provided a computer readable storage medium having a computer program stored thereon which, when executed by a processor, implements steps of the base station deployment method as described above.

### BRIEF DESCRIPTION OF THE DRAWINGS

FIG. 1 is a flowchart of a base station deployment method according to an embodiment of the present disclosure;
FIG. 2 is a schematic diagram illustrating base station deployment in a cellular structure according to an embodiment of the present disclosure;
FIGs. 3a and 3b are flowcharts of another base station deployment method according to an embodiment of the present disclosure;
FIG. 4 is a schematic diagram of a weak coverage region according to an embodiment of the present disclosure;
FIG. 5 is a schematic diagram illustrating an initial station location according to an embodiment of the present disclosure;
FIG. 6 is a schematic diagram illustrating base station deployment in a cellular structure according to an embodiment of the present disclosure;
FIG. 7 is a schematic diagram illustrating the remaining stations after checking the optional stations according to an embodiment of the present disclosure;
FIG. 8 is a schematic diagram of locations where the initial sites needs to be relocated according to an embodiment of the present disclosure;
FIG. 9 is a schematic diagram of an eventually selected macro station deployment result according to an embodiment of the present disclosure;
FIG. 10 is a schematic diagram illustrating the remaining outdoor weak coverage grids after a macro station is added according to an embodiment of the present disclosure;
FIGs. 11a to 11c are schematic diagrams of block ranges corresponding to 1, 2 and 3 coverage layers, respectively, according to an embodiment of the present disclosure;
FIGs. 12a and 12b show block ranges of an outdoor micro station b and an outdoor micro station c according to an embodiment of the present disclosure;
FIG. 13 is a schematic diagram illustrating azimuth adjustment of sectors according to an embodiment of the present disclosure;
FIG. 14 is a schematic diagram illustrating the stationing result on bin6 according to an embodiment of the present disclosure;
FIG. 15 is a schematic diagram of the stationing result on all outdoor weak coverage grids according to an embodiment of the present disclosure;
FIG. 16 is a schematic diagram of one weak coverage region according to another embodiment of the present disclosure;
FIG. 17 is a schematic diagram illustrating a deployment result of a first outdoor micro station according to an embodiment of the present disclosure;
FIG. 18 is a schematic diagram illustrating the stationing result after all candidate sites of Building II are deployed according to an embodiment of the present disclosure;
FIG. 19 is a schematic diagram illustrating the eventually deployed micro station according an embodiment of the present disclosure;
FIG. 20 is a schematic structural diagram of a base station deployment apparatus according to an embodiment of the present disclosure;
FIG. 21 is a schematic structural diagram of another base station deployment apparatus according to an embodiment of the present disclosure; and
FIG. 22 is a schematic structural diagram of a base station deployment apparatus according to an embodiment of the present disclosure.

### DETAILED DESCRIPTION

For clarity and better understanding of the technical problems to be solved, the technical solutions and advantages of the disclosure, the disclosure will be further described in detail with reference to the drawings in conjunction with the embodiments.

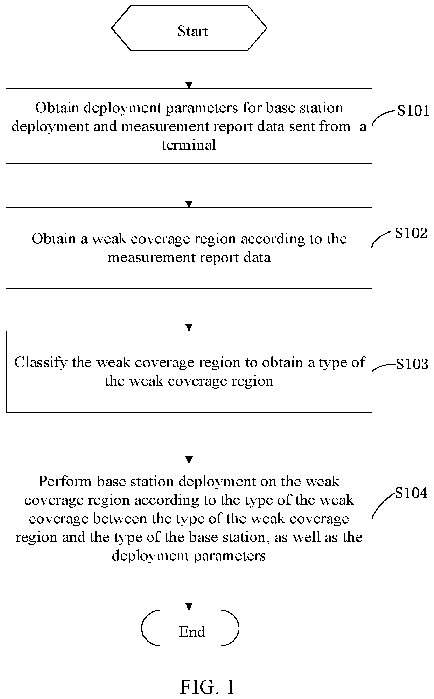

In order to meet the requirement of automatic base station deployment in a weak coverage region, in an embodiment of the present disclosure, there is provided a base station deployment method. Referring to FIG. 1, the deployment method includes the following steps S101 to S104.

At S101, deployment parameters for base station deployment and measurement report data sent from a terminal are obtained.

In an exemplary embodiment, the deployment parameters may include a coverage radius of a macro base station (may be simply referred to as a macro station), a coverage radius of a micro base station (may be simply referred to as a micro station), a coverage area of a micro station, a closest distance between macro base stations, a closest distance between a macro base station and a micro base station, and the like. The coverage radius of the macro base station may include: a macro base station outdoor coverage radius, and a macro base station indoor coverage radius. The coverage radius of the micro base station may include: a micro station outdoor coverage radius, and a micro station indoor coverage radius. It should be noted that the kind of the deployment parameters is not specifically limited in this embodiment.

The measurement report data refers to a report that a terminal (or a user) periodically reports to a base station at a certain time interval on a traffic channel through a control channel when connected to a network. For example, the report may include: longitude and latitude of a terminal, coverage strength of a main service cell and an adjacent cell, and other information. For example, the terminal may send data to a base station on a traffic channel every 480 ms (or every 470 ms on a signaling channel). The measurement report data may be used to count a weak coverage region. Thus, the measurement report data may be used for network evaluation and optimization.

It should be noted that in S101, the process of obtaining the deployment parameters for base station deployment and the process of obtaining the measurement report data sent from the terminal may be executed simultaneously or separately. It will be appreciated that in this embodiment, the sequence of the steps of obtaining the deployment parameters for base station deployment and obtaining the measurement report data sent from the terminal is not specifically limited.

At S102, a weak coverage region is obtained according to the measurement report data.

Weak coverage refers to the phenomenon of weak signals in a boundary region caused by an over-large area to be covered by the base station, an over-large distance between base stations, or blockage by a building. Weak coverage typically has a received signal level (Rxlev) less than -90 dBm.

Optionally, the weak coverage region may be represented by a weak coverage grid list, which may contain two tables, outdoor and indoor tables. Each grid in the weak coverage grid list contains a local feature attribute, such as a water area, a building, vegetation, and the like.

At S103, the weak coverage region is classified to obtain a type of the weak coverage region.

Optionally, scenario classification may be performed on the weak coverage region according to at least one of point of interest information and the number of weak coverage grids of the weak coverage region, so as to obtain the type of the weak coverage region.

In order to meet the requirement of automatic base station deployment in a weak coverage region, the type of the weak coverage region may be identified through a point of interest (POI) database which includes information such as longitude and latitude corresponding to the weak coverage region, and a scenario corresponding to the weak coverage region. The POI database classifies the types of buildings. For example, the POI database of Baidu includes industry classifications such as food, hotels, shopping, etc. POI data may be marked and classified accurately in the format of coordinates or data. The longitude and latitude of each weak coverage region may be sent to the POI database for a query to obtain an industry classification of the building corresponding to the weak coverage region. The type of the weak coverage region may be identified from the POI database, and a designated suitable type of base station deployment is determined according to the type of the weak coverage region, and a preset correspondence relationship between the type of the weak coverage region and the type of the base station.

It should be noted that the type of the weak coverage region may be defined as needed. The type of the weak coverage region may be obtained by classifying the weak coverage region according to the number of weak coverage grids. This can also be done according to a scenario corresponding to the weak coverage region. For example, the type of the weak coverage region regarding both a lodging area and a dormitory in an industry classification in the POI database may be defined as a residential area.

At S104, base station deployment is performed on the weak coverage region according to the type of the weak coverage region, a preset correspondence relationship between the type of the weak coverage region and the type of the base station, and the deployment parameters.

It should be noted that the weak coverage region may be classified according to the number of weak coverage grids and /or the scenario corresponding to the weak coverage region. In an exemplary embodiment, when the weak coverage region is classified according to the number of weak coverage grids, the type of the weak coverage region includes, but is not limited to: a first region where the number of weak coverage grids reaches a first threshold, a second region where the number of weak coverage grids fails to reach a first threshold, and a weak coverage building. When the weak coverage region is classified according to the scenario corresponding to the weak coverage region, the type of the weak coverage region includes, but is not limited to: a residential area, a commercial area, a park, etc.

The type of the base station includes, but is not limited to, a macro base station, an indoor micro base station, and an outdoor micro base station.

In an embodiment of the present disclosure, the base station deployment is performed on the weak coverage region according to the type of the weak coverage region, the preset correspondence relationship between the type of the weak coverage region and the type of the base station, and the deployment parameters, wherein the type of the weak coverage region may be identified according to the POI database, and a designated suitable type of base station deployment is determined according to the type of the weak coverage region, and the preset correspondence relationship between the type of the weak coverage region and the type of the base station. As such, in the base station deployment method according to the embodiment of the disclosure, scenario recognition can be automatically carried out according to the actual region characteristics, thereby providing a matched station (base station) deployment scheme and improving accuracy of the scheme. In the base station deployment method according to the embodiment of the disclosure, all operations can be automatically completed through programs, thereby improving the work efficiency while reducing errors due to insufficient experience when a planning engineer performs subjective judgment.

During the base station deployment, the weak coverage region may be first partitioned or classified according to the number of weak coverage grids. The type of the deployed macro station may be determined by the type of the weak coverage region obtained from the number of weak coverage grids. Meanwhile, the base stations may be deployed in a sequence determined according to a size of the region partitioned based on the number of weak coverage grids. For example, the base station deployment may be prioritized for regions with more weak coverage grids in the weak coverage region.

In an embodiment of the present disclosure, if the weak coverage region includes a first region where the number of weak coverage grids reaches a first threshold, where the first region includes at least one sub-region, the first region may be generated by the weak coverage grids according to the proximity relation using an aggregation algorithm, and the region is determined as the first region only when the number of weak coverage grids in the region reaches the first threshold.

At this time, the process of performing base station deployment on the weak coverage region according to the type of the weak coverage region, the preset correspondence relationship between the type of the weak coverage region and the type of the base station, and the deployment parameters specifically includes the following steps 11) to 14).
11) It is determined that a base station type of the first region is macro base station according to the type of the weak coverage region, the preset correspondence relationship between the type of the weak coverage region and the type of the base station.
12) The at least one sub-regions in the first region are prioritized to obtain a sub-region with the highest priority.

Optionally, the at least one sub-region may be prioritized according to an area size thereof. For example, the sub-region with a larger area corresponds to a higher priority, although the embodiments of the disclosure are not limited thereto.
13) Macro base station deployment is performed on the sub-region with the highest priority according to a coverage radius of the macro base station in the deployment parameters.
14) It is judged whether a sub-region without a deployed macro base station is present in the first region, wherein if the sub-region without a deployed macro base station is present in the first region, step 12), i.e., performing the step of prioritizing on the at least one sub-region of the first region to obtain a sub-region with the highest priority, is executed.

It should be noted that if no sub-region without a deployed macro base station is present in the first region and the weak coverage region includes only a first region, the procedure is ended. If no sub-region without a deployed macro base station is present in the first region, and the weak coverage region further includes, in addition to the first region, at least one second region where the number of weak coverage grids fails to reach a first threshold, base station deployment needs to be continued in the second region.

Herein, the step of performing macro base station deployment on the sub-region with the highest priority according to the coverage radius of the macro base station in the deployment parameters may be implemented in many ways, one of which will be specifically described hereinafter.

Specifically, the step of performing macro base station deployment on the sub-region with the highest priority according to the coverage radius of the macro base station in the deployment parameters includes the following sub-steps 201) to 211).

201) A first base station site of the sub-region with the highest priority is calculated.

Optionally, a mean value of X coordinates (geodetic coordinates) and a mean value of Y coordinates of center points of respective grids in the sub-region with the highest priority may be calculated to obtain barycentric coordinates of the sub-region with the highest priority, and the center point of the grid where the barycentric coordinates is located may be taken as the first base station site.

202) With the first base station site as a starting point, a first macro base station deployment scheme is established for the sub-region with the highest priority using a cellular structure according to the coverage radius of the macro base station in the deployment parameters.

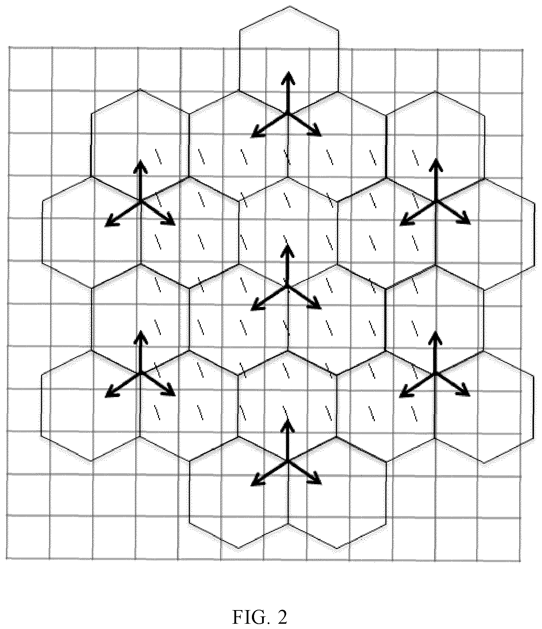

FIG. 2 is a schematic diagram illustrating base station deployment in a cellular structure according to an embodiment of the present disclosure. Referring to FIG. 2, with the first base station site as a starting point, stations are deployed outward layer by layer, and each base station (or station) has a coverage area being a cellular range, until a total coverage area of all base stations is able to completely cover the sub-region with the highest priority. Each time a new base station is added, it is guaranteed that the new base station has a weak coverage grid in a coverage area thereof. Whether a grid is covered or not is determined by judging whether the center point of the grid is located in the coverage area of the station.

203) If no deployed macro base station at an improper location is present in the first macro base station deployment scheme, the number of weak coverage grids eliminated by each deployed macro base station in the first macro base station deployment scheme is calculated.

In this context, the improper location includes, but is not limited to, the following two situations:
Situation I: the deployed macro base station is located at a site where the station is not able to be added (such as a water area).
Situation II: the deployed macro base station is located at a site too close to current network stations or sites of other deployed macro base stations.

In addition, if a deployed macro base station at an improper location is present in the first macro base station deployment scheme, the deployed macro base station at an improper location in the first macro base station deployment scheme is deleted.

It should be noted that in calculation of the number of weak coverage grids eliminated by each deployed macro base station, the number of weak coverage grids in the first and second regions eliminated by the deployed macro base stations needs to be counted.

204) A deployed macro base station which eliminates weak coverage grids by a number less than a second threshold is deleted to obtain a second macro base station deployment scheme for the sub-region with the highest priority.

In this context, the second threshold refers to the minimum number of weak coverage grids eliminated by the deployed macro base station. It should be noted that the second threshold may be set as needed.

205) The number of sites of deployed macro base stations and the total number of eliminated weak coverage grids in the second macro base station deployment scheme are counted.

It should be noted that when the total number of eliminated weak coverage grids is counted, the number of weak coverage grids in the first and second regions eliminated by the deployed macro base stations needs to be counted.

206) Other locations except for the first base station site in the sub-region with the highest priority are sequentially taken as the starting point, and a third macro station deployment scheme is established for the sub-region with the highest priority using a cellular structure according to the coverage radius of the macro base station.

207) If no deployed macro base station at an improper location is present in the third macro station deployment scheme, the number of weak coverage grids eliminated by each deployed macro base station in the third macro station deployment scheme is calculated.

It should be noted that if a deployed macro base station at an improper location is present in the third macro station deployment scheme, the deployed macro base station at an improper location in the third macro station deployment scheme should be deleted.

208) A deployed macro base station in the third macro station deployment scheme which eliminates weak coverage grids by a number less than a third threshold is deleted to obtain a fourth macro base station deployment scheme for the sub-region with the highest priority.

It should be noted that the third threshold may be equal to the second threshold, although the embodiments of the disclosure are not limited thereto.

209) The number of sites of deployed macro base stations and the total number of eliminated weak coverage grids in the fourth macro base station deployment scheme are counted.

210) An optimal deployment scheme is selected from the second macro base station deployment scheme and the fourth macro base station deployment scheme according to the number of sites of deployed macro base stations and the total number of eliminated weak coverage grids in the second and fourth macro base station deployment schemes.

In an exemplary embodiment, the optimal deployment scheme is selected based on principles including:
(a) a maximum number of eliminated weak coverage grids;
(b) a minimum number of sites of newly added base stations (or stations) under the condition that the same number of weak coverage grids are eliminated;
(c) a shortest average distance between the stations and the respective weak coverage grids covered by the stations under the condition that the number of eliminated weak coverage grids is the same as the number of sites of newly added stations; and
(d) randomly selecting one of above if there are still more than one base station deployment schemes satisfying the above three principles.

211) Macro base station deployment is performed on the sub-region with the highest priority according to the optimal deployment scheme.

In another embodiment, if no sub-region without a deployed macro station is present in the first region, and the weak coverage region further includes, in addition to the first region, at least one second region where the number of weak coverage grids fails to reach a first threshold (the second region includes a weak coverage grid uncovered by a coverage area of the deployed macro base station in the first region), the step of performing base station deployment on the weak coverage region according to the type of the weak coverage region, the preset correspondence relationship between the type of the weak coverage region and the type of the base station, and the deployment parameters, after step 14), further includes the following sub-steps 31) to 37).
31) It is determined that a base station type of the second region is micro base station according to the type of the weak coverage region, the preset correspondence relationship between the type of the weak coverage region and the type of the base station.
32) The maximum number of coverage layers of the micro base station is calculated according to a coverage radius of the micro base station in the deployment parameters.
   In an exemplary embodiment, the maximum number of coverage layers is the number of covered grids converted from a coverage radius of the micro base station. Optionally, assuming that the coverage radius of the micro base station is R, the grid accuracy is L, and the maximum number of coverage layers of the micro base station is calculated by the following formulas:
   if R < L/2, the maximum number of coverage layers is 0, namely, the deployment of this type of station is not suggested because the map precision is too large;
   if R ≥ L/2, the maximum number of coverage layers is INT(R/L) + 1, namely, R is divided by L and rounded to an integer, and then the integer is added with 1.

   It should be noted that the coverage radius of the micro base station may include an indoor coverage radius and an outdoor coverage radius. Accordingly, the maximum number of coverage layers of the micro base station includes: the maximum number of indoor coverage layers and the maximum number of outdoor coverage layers of the micro base station.
33) Candidate sites corresponding to the weak coverage grids of the second region are obtained.
   It should be noted that the candidate site is a micro station site with a proper location. Then, candidate sites corresponding to the weak coverage grids of the second region are obtained. That is, according to the above two situations of the improper location, only the candidate site corresponding to the weak coverage grid at a proper location is obtained after those corresponding to the weak coverage grids at an improper location are excluded.
34) The candidate sites of the second region are prioritized to obtain a candidate site with the highest priority.
   Optionally, sorting may be performed according to the number of MR samples (i.e., the number of terminals MR transmitting to the base station) in the grid of each candidate site in a large-to-small order. For example, the more MR samples are present in the grid of a candidate site, the higher the priority of the candidate site is corresponding to the grid.
35) The type of the micro base station and the number of sites of micro base stations deployed at the candidate site with the highest priority are determined according to the maximum number of coverage layers of the micro base station.
   Optionally, the type of the micro station is selected based on the following principles:
   (e) selecting a micro station with the largest number of outdoor weak coverage grids within the maximum number of coverage layers of the micro base station; and
   (f) selecting a micro station with the minimum number of coverage layers under the condition of the same number of outdoor weak coverage grids.
36) Micro base station deployment is performed at the candidate site with the highest priority according to the type of the micro base station and the number of micro base stations deployed at the candidate site with the highest priority.
37) It is judged whether a region without a deployed micro base station is present in the second region, wherein if the region without a deployed micro base station is present in the second region, step 34), i.e., the step of prioritizing the candidate sites of the second region to obtain a candidate site with the highest priority is performed.

It should be noted that if no region without a deployed micro base station is present in the second region, and the weak coverage region includes only the first region and the second region, the procedure is ended; and if no region without a deployed micro base station is present in the second region, and the weak coverage region further includes at least one weak coverage building in addition to the first and second regions, base station deployment needs to be performed on the at least one weak coverage building. When the weak coverage region includes only the second region, only steps 301) to 307) are performed.

The step of determining the number of micro base stations deployed at the candidate site with the highest priority according to the maximum number of coverage layers of the micro base station may be implemented in many ways, an optimal one of which will be specifically described hereinafter.

If the micro base station is an omnidirectional station, only one micro base station is deployed; and if the micro base station is a directional station, a precise location deployment of the antenna needs to be matched with the actual distribution of the weak coverage grids, and as few stations as possible are used to cover all the weak coverage grids.

In order to speed up the operation and simplify the algorithm, in this embodiment, it may be assumed that an antenna of the micro base station is deployed in a central layer of the maximum number of coverage layers, and each micro station has a coverage azimuth range of 120 degrees (which is modifiable according to the performance of the device antenna). The step of determining the number of micro base stations deployed at the candidate site with the highest priority according to the maximum number of coverage layers of the micro base station includes the following sub-steps 41) to 49).
41) It is judged whether weak coverage grids are present only in the central layer of the maximum number of coverage layers.
42) If weak coverage grids are present only in the central layer of the maximum number of coverage layers, one micro base station is deployed in the central layer of the maximum number of coverage layers.
   At this time, the azimuth is at 0 degree. The azimuth herein is also called horizontal longitude, i.e., a horizontal angle from a north-pointing direction of a point to a target direction line in a clockwise manner. The azimuth range refers to a width of an azimuth that one antenna covers.
43) If weak coverage grids are present not only in the central layer of the maximum number of coverage layers, three sectors may be deployed in the central layer of the maximum number of coverage layers and rotated according to a plurality of preset angles to form a plurality of scenarios, in each of the scenarios the three sectors corresponding to different azimuths.
   For example, the three sectors may be rotated in a 10-degree increment to the right each time to form a plurality of scenarios, including a first scenario, a second scenario, and a third scenario. For example, the azimuths of the three sectors corresponding to the first scenario are 0°, 120° and 240°, the azimuths of the three sectors corresponding to the second scenario are 10°, 130° and 250°, and the azimuths of the three sectors corresponding to the third scenario are 20°, 140° and 260°.
44) If weak coverage grids are present in coverage areas of all sectors in all scenarios, it is sequentially judged in all scenarios whether the weak coverage grids contained in adjacent sectors are able to be covered by one sector.
45) If weak coverage grids contained in adjacent sectors in a certain scenario are able to be covered by one sector, the adjacent sectors are merged.
46) The number of micro base stations corresponding to the number of sectors in each of the scenarios is counted.
47) An optimal scenario is selected from all the scenarios according to the number of micro base stations of the scenarios.
   It should be noted that the optimal scenario is selected from all the scenarios based on the following principles:
   (g) selecting a scenario with the minimum number of residual sectors in all scenarios;
   (h) selecting a scenario with the smallest variance of the number of weak coverage grids contained in all the sectors under the condition of the same number of sectors (for example, if two scenarios each have two sectors, the number of weak coverage grids included therein are respectively (2, 2) and (1, 3), and the variances of the weak coverage grids are respectively 0 and 1, selecting the scenario (2, 2) as a final scheme); and
   (i) selecting a scenario with a first cell azimuth closer to 0 degree under the condition of the same number and variance.
48) An azimuth of each of the sectors is determined.
   It should be noted that among all the weak coverage grids included in one sector, given that the minimum azimuth is X, and the maximum azimuth is Y, then the azimuth of the sector can be calculated by the following formulas:
   if Y - X ≤ 180, the azimuth of the sector is (X + Y)/2;
   if Y-X >180 and (X + Y)/2 ≥ 180, the azimuth of the sector is (X + Y)/2 -180;
   if Y-X >180 and (X + Y)/2 < 180, the azimuth of the sector is (X + Y)/2 + 180.
49) Micro base station deployment is performed according to the azimuths of the sectors and the optimal scenario.

In another embodiment, if no region without a deployed micro base station is present in the second region, the weak coverage region further includes at least one weak coverage building in addition to the first and second regions. At this time, after step 37), the step of performing base station deployment on the weak coverage region according to the deployment parameters and the type of the weak coverage region further includes steps 501) to 513).

501) It is judged whether a coverage area of the deployed micro base station is able to cover weak coverage grids in the weak coverage buildings. If the coverage area of the deployed micro base station is not able to cover weak coverage grids in the weak coverage buildings, step 502) is performed; and if the coverage area of the deployed micro base station is able to cover weak coverage grids in the weak coverage buildings, the procedure is ended.

502) If the coverage area of the deployed micro base station is not able to cover weak coverage grids in the weak coverage buildings, the step of prioritizing is performed on the weak coverage buildings to obtain a weak coverage building with the highest priority.

Optionally, the weak coverage buildings may be prioritized from large to small in area. If the areas are equal, one is randomly selected.

503) A second candidate site in the weak coverage building with the highest priority is obtained.

504) It is judged whether a weak coverage grid corresponding to the weak coverage region includes the second candidate site.

505) If the weak coverage grid corresponding to the weak coverage region includes the second candidate site, a first micro base station deployment scheme is established at the second candidate site.

506) The number of weak coverage grids eliminated by the micro base station deployed at the second candidate site is calculated.

507) A third candidate site is selected as a newly added station, and it is judged whether the weak coverage grid corresponding to the weak coverage region includes the third candidate site.

508) If the weak coverage grid corresponding to the weak coverage region includes the third candidate site, a second micro base station deployment scheme is established at the third candidate site.

509) The number of weak coverage grids eliminated by the micro base station deployed at the third candidate site is calculated.

510) A candidate site corresponding to the optimal micro base station deployment scheme is selected from the first micro base station deployment scheme and the second micro base station deployment scheme according to the number of weak coverage grids eliminated by the micro base station deployed at the third candidate site and by the micro base station deployed at the second candidate site.

511) The number of micro stations to be deployed in the weak coverage buildings is calculated.

For example, if the area of a weak coverage building is 20000 square meters, the coverage area of a micro station is 200 square meters, and each floor has a default height of 3 m, then the number of micro stations to be deployed in the weak coverage building is about 20000/200/3 ≈ 33.

512) Micro base station deployment is performed at the optimal candidate site in the weak coverage building according to the number of micro stations to be deployed in the weak coverage buildings.

513) It is judged whether a weak coverage building without a deployed micro base station is present in the weak coverage region, wherein if the weak coverage building without a deployed micro base station is present in the weak coverage region, step 502), i.e., the step of prioritizing the weak coverage buildings to obtain a weak coverage building with the highest priority, is performed.

It should be noted that when the weak coverage region includes only at least one weak coverage building, steps 501) to 513) may be directly performed.

To facilitate understanding of the base station deployment method according to the embodiment of the present disclosure, a workflow of the deployment method is specifically described below with reference to the accompanying drawings.

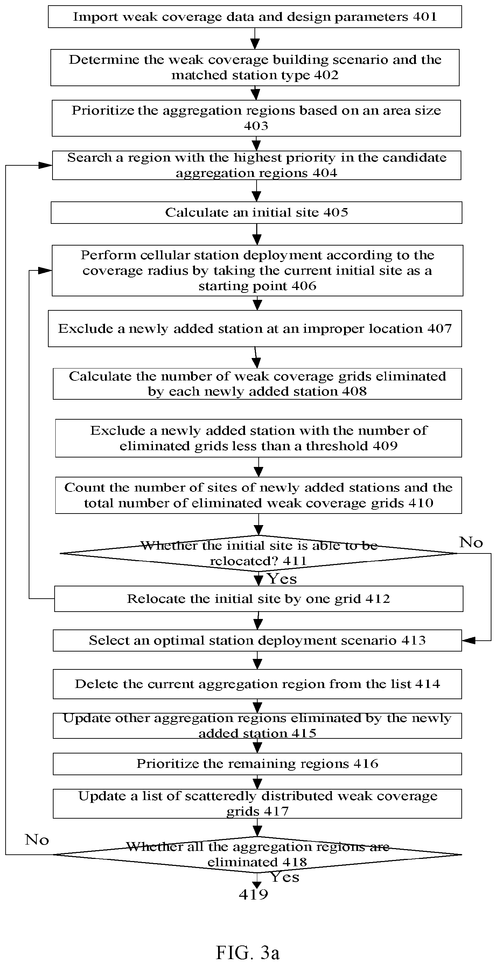

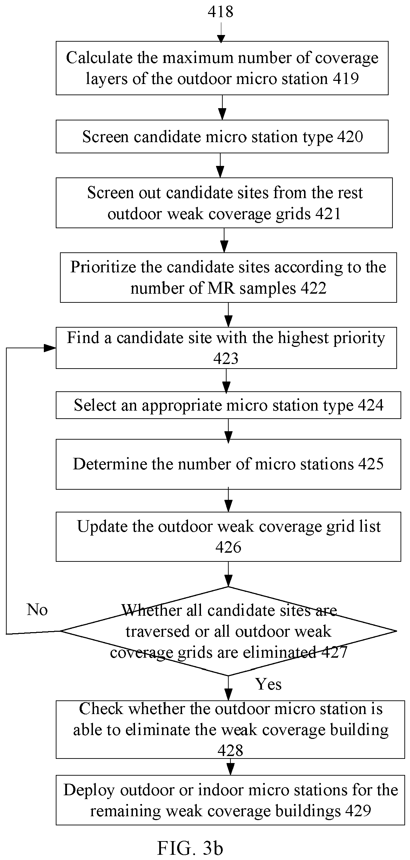

FIGs. 3a to 3b show another base station deployment method according to an embodiment of the present disclosure. Referring to Figs. 3a to 3b, the deployment method includes the following step 401.

At step 401, weak coverage data and design parameters are input.

The weak coverage data herein includes location information corresponding to a weak coverage region. The location information corresponding to the weak coverage region may be represented by a weak coverage grid. For example, all neighboring weak coverage grids are considered to be in the same region, and non-neighboring grids are in different regions. Typically, an aggregation region is output only after the number of weak coverage grids in the region reaches a certain threshold. Thus, there may be scattered weak coverage grids that fail to aggregate. The aggregation region may be divided into outdoor and indoor regions as well. In later procedures, macro station deployment is attempted only in the aggregation region. Thus, aggregation and macro station deployment typically happen only in a region with denser weak coverage grids. This is actually a judgment of the deployment scenario of macro stations. In the following description, "weak coverage region" refers to all weak coverage grids in general, and only "aggregation region" refers to the weak coverage aggregation region output here.

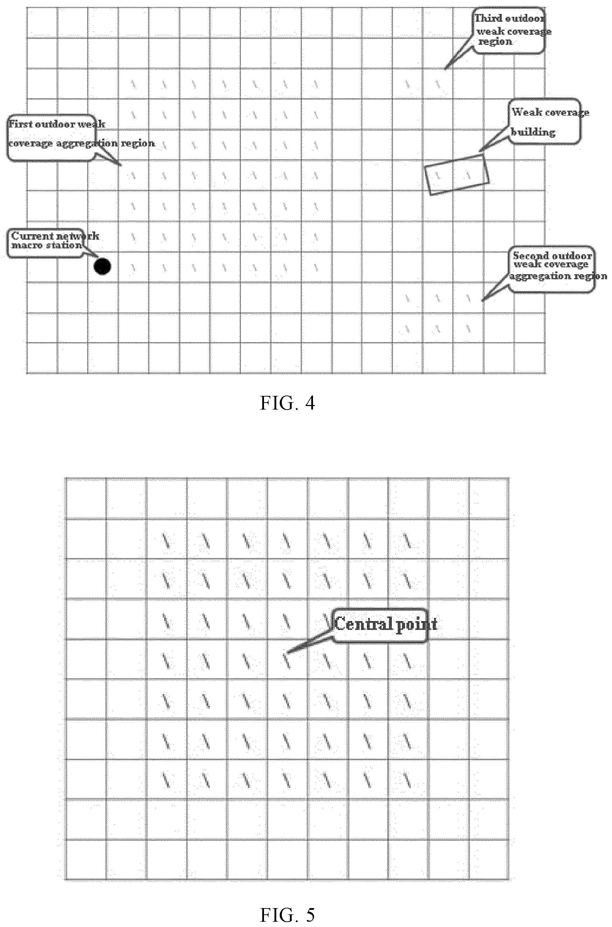

Referring to FIG. 4, in the present embodiment, the weak coverage region includes a first outdoor weak coverage aggregation region (hereinafter "Region I"), a second outdoor weak coverage aggregation region (hereinafter "Region II"), a third outdoor weak coverage region (hereinafter "Region III"), and a weak coverage building (with an area of 20000 square meters). The first outdoor weak coverage aggregation region and the second outdoor weak coverage aggregation region are two aggregation regions, while the third outdoor weak coverage region is an unaggregated and scattered weak coverage grid distribution region. The grid accuracy is 100 meters. The current network has one macro station.

In this embodiment, the station type (or base station type) used here includes: macro station, outdoor micro station b, outdoor micro station c and indoor micro station d. The macro station has a directional antenna, and a half-power angle of 65 degrees; the outdoor micro stations b and c each have a directional antenna, and a half-power angle of 65 degrees; and the indoor micro station d has an omnidirectional antenna.

The weak coverage data further includes a building scenario matching table, which includes a correspondence relationship among the building scenario, the industry classification in the POI database, and the matched station type, for example, as shown in the following table.

| Scenario | Industry classification in Baidu POI database | Matched station type |
|---|---|---|
| Residential area | Lodging area and dormitory | Outdoor micro station b |
| Commercial area | Office building | Indoor micro station d |
| Parks or the like | Parks, zoos, plantations, amusement parks | Outdoor micro station c |

The relevant information of the design parameters is as follows:
(1) a macro station outdoor coverage radius: 250 meters;
(2) a macro station indoor coverage radius: 100 meters;
(3) an outdoor coverage radius of the outdoor micro station b: 200 meters;
(4) an indoor coverage radius of the outdoor micro station b: 70 meters;
(5) an outdoor coverage radius of the outdoor micro station c: 150 meters;
(6) an indoor coverage radius of the outdoor micro station c: 60 meters;
(7) a coverage area of the indoor micro station d: 200 square meters;
(8) the nearest distance (meters) between macro stations: the distance between a newly added macro station and a current network macro station, and between newly added macro stations, is not less than a threshold, which is 150 meters in the embodiment;
(9) the nearest distance (meters) between micro stations: the distance between a newly added outdoor micro station and any macro station (including the current network and new stations) is not less than a threshold, which is 100 meters in the embodiment; and
(10) the minimum number of girds covered by the newly added macro station: the number of grids covered by the newly added macro station should be equal to or greater than a threshold (which is 6 in this embodiment, for example).

At step 402, the weak coverage building scenario and the matched station type are determined. For example, referring to FIG. 4, in this embodiment, there is one indoor weak coverage building belonging to the industry type of "office building" obtained through query of the Baidu database. By inquiring the building scenario matching table input in the last step, it is obtained that the scenario is a commercial area and the matched station type is indoor micro station d.

At step 403, the aggregation regions are prioritized based on an area size.

Referring to FIG. 4, in this embodiment, Regions I and II have an area of 49 grids and an area of 6 grids, respectively, and thus Region I has a higher priority than Region II.

At step 404, a region with the highest priority is searched in the candidate aggregation regions.

The region with the highest priority is searched in the current candidate aggregation regions for station deployment. In this embodiment, Region I is deployed first.

At step 405, an initial site is calculated.

First, a barycenter of the aggregation region is calculated. For example, a mean value of the X coordinates (geodetic coordinates) and a mean value of the Y coordinates of the center point of each grid in the aggregation region are obtained to form the barycentric coordinates. Then, the center point of the grid where the barycenter is located is taken as the initial site. In this embodiment, the initial site of Region I is as shown in FIG. 5.

At step 406, cellular station deployment is performed according to the coverage radius by taking the current initial site as a starting point.

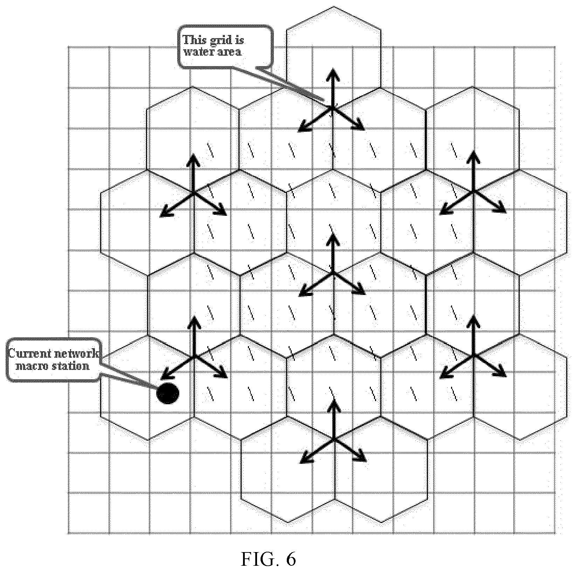

Referring to FIG. 6, starting from the current initial site, stations are deployed outwards layer by layer, and each station has a coverage area being a cellular range, until a total coverage area of all stations is able to completely cover the aggregation region. Each time a new station is added, it is guaranteed that the newly added station has a weak coverage grid in a coverage area thereof. Whether a grid is covered is determined by judging whether the center point of the grid is within the coverage area of the station. After the cellular station deployment, 7 macro stations are deployed in Region I in total, which are able to just cover the weak coverage region.

At step 407, a newly added station at an improper location is excluded.

The above 7 stations are excluded if the grids with the stations are not suitable for station deployment. The stations may be not suitable for two reasons:
(1) the station is at a site where no station is able to be added (such as a water area);
(2) the station is at a site too close to a current network site or a previously added site.

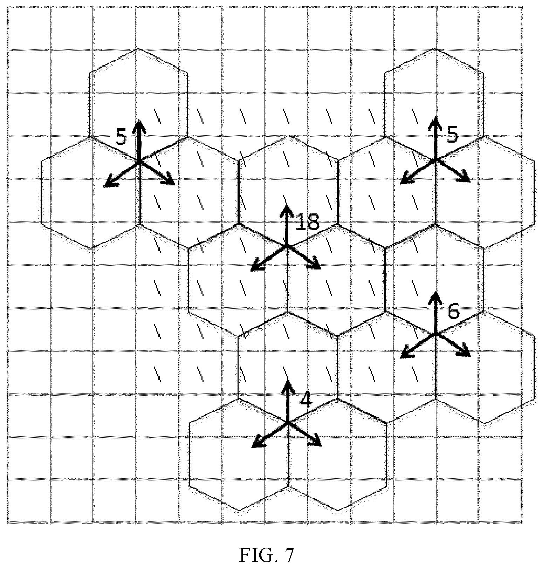

As shown in FIG. 6, in this embodiment, after local feature attributes of the grid are introduced, it is found that the grid where a station 1 is located is a water area where a station cannot be deployed, and thus is excluded; and then, after a current web site list is imported, it is found that a station 2 is too close to the current web site and thus is excluded. The newly added stations after excluding the stations 1 and 2 are as shown in FIG. 7.

At step 408, a number of weak coverage grids eliminated by each newly added station is calculated.

The number of weak coverage grids within the coverage area of each newly added station is calculated. The weak coverage grids to be calculated here include, besides those in the current aggregation region, grids in other adjacent regions, and scattered weak coverage grids which are not aggregated into a region. The weak coverage grids counted in the following steps are also processed in the same way, and are not described again. Referring to FIG. 7, the number of weak coverage grids eliminated by the above deployed stations is 4, 5, 5, 6, and 18, respectively.

At step 409, a newly added station which eliminates the grids by a number less than a threshold is excluded.

In the input parameters, the "minimum number of grids covered by a newly added macro station" is set to 6. Therefore, only the two stations with 18 grids and 6 grids in FIG. 7 are reserved.

At step 410, the number of sites of newly added stations and the total number of eliminated weak coverage grids are counted. In this scenario, there are 2 newly added stations and the total number of eliminated weak coverage grids is 24.

At step 411, it is judged whether the initial site is able to be relocated.

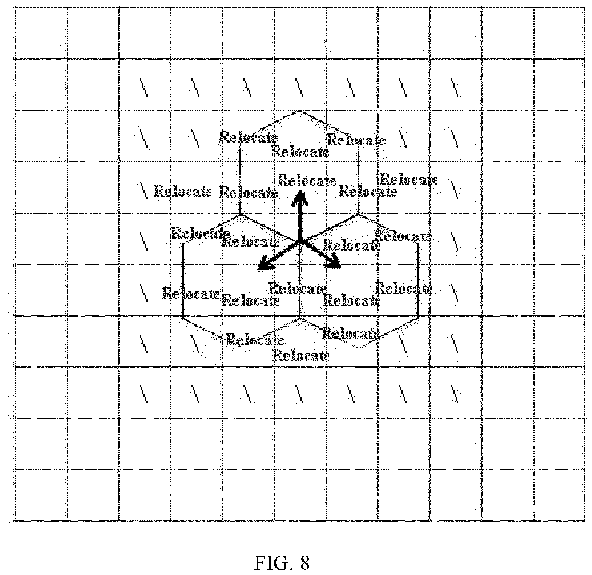

As shown in FIG. 8, the initial site may be relocated on the grids within its radius until completely relocated.

At step 412, the initial site is relocated by one grid.

After the initial site is relocated to other grids, returning to step 406, and the cellular station deployment and the like are repeated to obtain the number of sites of newly added stations and the number of eliminated weak coverage grids in the new scenario.

At step 413, an optimal station deployment scenario is selected.

In station deployment scenarios with different initial sites, a final deployment scheme is selected based on the following principles:
(1) a deployment scheme with the maximum number of eliminated weak coverage grids;
(2) a deployment scheme with the minimum number of sites of newly added stations under the condition of the same number of eliminated weak coverage grids;
(3) a deployment scheme with the shortest average distance between the stations and the respective weak coverage grids covered by the stations under the condition of the same number of eliminated weak coverage grids and the same number of sites of newly added stations; and
(4) a deployment scheme randomly selected if there are still more than one base station deployment schemes satisfying the above three principles.

In this embodiment, the number of sites of newly added stations and the number of eliminated weak coverage grids for all scenarios obtained after the initial site is relocated are as follows:

| Number of stations | | | | | | | | | | | |
|---|---|---|---|---|---|---|---|---|---|---|---|
| Number of grids | 4 | 9 | 1 | 0 | 1 | 3 | 2 | 4 | 8 | 3 | 0 |
| Number of | | | | | | | | | | | |
| stations | | | | | | | | | | | |
| Number of grids | 5 | 0 | 1 | 3 | 6 | 5 | 9 | 4 | 8 | 4 | |

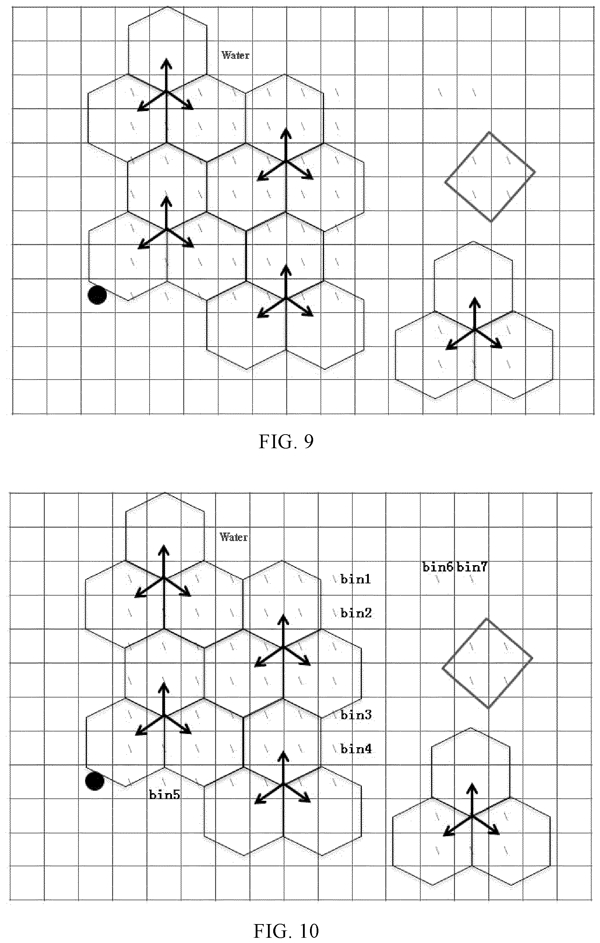

According to the relationship between the number of sites of newly added stations and the number of eliminated weak coverage grids shown in the above table, one of the two scenarios with 4 stations and 45 grids is randomly selected, as shown in FIG. 9.

At step 414, the current aggregation region is deleted from the list.

In this embodiment, Region I is deleted, and only Region II is reserved in the list.

At step 415, other aggregation regions eliminated by the newly added station are updated. If any other weak coverage region is present in the coverage area of the newly added station and is able to be completely eliminated, this weak coverage region will be also deleted from the list.

In this embodiment, the coverage area of the above newly added station cannot completely eliminate other weak coverage regions.

At step 416, the remaining regions are prioritized.

In this embodiment, no reordering is needed since only a second region is included.

At step 417, a list of scatteredly distributed weak coverage grids is updated. If any scatteredly distributed weak coverage grid is present in the coverage area of the above newly added station, it is also deleted from the weak coverage grid list.

In this embodiment, no scatteredly distributed weak coverage grid is present in the coverage area of the above newly added station.

At step 418, it is judged whether all the aggregation regions are eliminated; if all the aggregation regions are eliminated, the addition of the macro station is ended and step 419 is performed; if not all the aggregation regions are eliminated, the process returns to step 404 and searches for a region with the highest priority for subsequent station addition.

In this embodiment, station addition continues in Region II, and a macro station is newly added. The final addition result of all the macro stations are as shown in FIG. 9.

At step 419, the maximum number of coverage layers of the outdoor micro station is calculated.

According to the formulas for calculating the maximum number of coverage layers, the maximum number of coverage layers of the outdoor micro station b and the outdoor micro station c can be calculated as follows:

| | Maximum number of outdoor coverage layers | Maximum number of indoor coverage layers |
|---|---|---|
| Outdoor micro station b | 3 | 1 |
| Outdoor micro station c | 2 | 1 |

At step 420, candidate micro station types are screened.

If the two micro stations have the same maximum number of outdoor coverage layers, the one with a larger radius is selected as an alternative, and the other one with a smaller radius is not considered in the following station addition. If the radii are the same, one is randomly selected. In this embodiment, the micro station b and the micro station c are both used as alternative base station types.

At step 421, grids on which station deployment can be performed are screened out as candidate sites from the remaining outdoor weak coverage grids. The screening conditions are the same as in step 407.

In this embodiment, as shown in FIG. 10, the remaining outdoor weak coverage grids include bin1 to bin5 of Region I, and bin6 and bin7 of Region III, which may serve as candidate sites after screening.

At step 422, the candidate sites are prioritized according to the number of MR samples.

In this embodiment, the respective candidate sites are ranked based on the number of MR samples in the grids where the candidate sites are located from large to small, which is also the priority order of the candidate sites. The priority order in this embodiment is bin6> bin7> bin1> bin2> bin3> bin4> bin5.

At step 423, a candidate site with the highest priority is searched for.

In this embodiment, bin6 is selected for station deployment.

At step 424, an appropriate micro station type is selected.

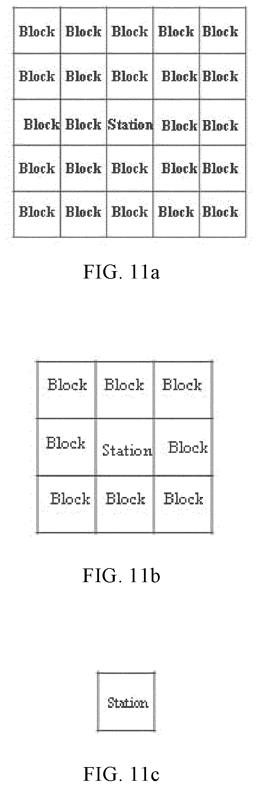

Optionally, the selection method including: deploying all types of micro stations on the current grid, and calculating a block range according to the maximum number of coverage layers of the micro station. The block has a shape as shown in FIGs. 11a to 11c. Here, FIG. 11a is a block range corresponding to 3 coverage layers, FIG. 11b is a block range corresponding to 2 coverage layers, and FIG. 11c is a block range corresponding to 1 coverage layer.

Meanwhile, the micro station type is selected according to the following principles:
a micro station with the maximum number of outdoor weak coverage grids in the block range; and
a micro station with the minimum number of coverage layers under the condition of the same number of outdoor weak coverage grids.

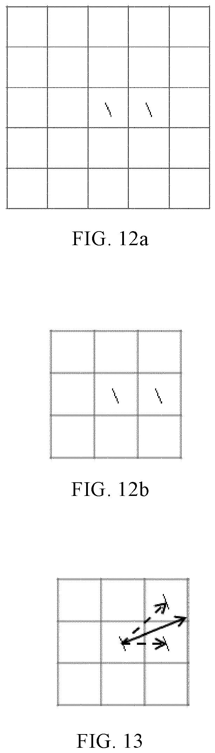

In this embodiment, FIG. 12a shows the block range of the micro station b. Referring to FIG. 12a, the number of weak coverage grids eliminated by the micro station b is 2. FIG. 12b is the block range of the micro station c. Referring to FIG. 12b, the number of weak coverage grids eliminated by the micro station c is also 2. The type of the final micro station is selected to be the micro station c since the number of coverage layers of the micro station c is smaller.

At step 425, the number of micro stations is determined.

It should be noted that if the micro station is an omnidirectional station, the number of micro stations is 1; if the micro station is a directional station, a precise location deployment of the antenna needs to be matched with the actual distribution of the weak coverage grids, and as few stations as possible are used to cover all the weak coverage grids. Here, an optimal distribution may be obtained by adopting a refined optimization algorithm (the antenna is not necessarily arranged in the center of the block), and in order to speed up the operation, the algorithm is simplified and the precision is reduced.

In this embodiment, a simplified algorithm is employed. The number and azimuths of the antennas are calculated assuming that all antennas are deployed in the center of the block. It is assumed that each micro station has a coverage azimuth range of 120 degrees (which is modifiable according to the performance of the device antenna). That is, for the micro station c, two layers of grids with the 120-degree azimuth range can be covered. The azimuth, also called horizontal longitude, is one of the methods for measuring an angle difference between objects on a plane, and refers to a horizontal angle from a north-pointing direction of a point to a target direction line in a clockwise manner. The azimuth range refers to a width of an azimuth that one antenna covers. The azimuth is specifically calculated by the following process:
601) If weak coverage grids are present only at the center point of the block, one micro station is deployed in the center of the block, the azimuth is at 0 degree, and the procedure is ended; otherwise, step 602) will be performed.
602) Three sectors are deployed in the center of the block, wherein a plurality of scenarios are defined, each of which is rotated by 10 degrees to the right and corresponds to different azimuths of the three sectors (for example, the azimuths of the three sectors in different scenarios are respectively 0°/120°/240°, 10°/130°/250°, 20°/140°/260°/...... 110°/230°/350°).
603) It is judged whether weak coverage grids are present in the coverage area of all of the sectors in each scenario, and if weak coverage grids are not present in the coverage area of all of the sectors in each scenario, the scenario is removed.
604) Adjacent sectors in each of the scenarios are traversed to judge whether the weak coverage grids contained in the adjacent sectors can be covered by one sector, and if the weak coverage grids contained in the adjacent sectors are not able to be covered by one sector, the adjacent sectors are merged and only one sector is reserved.
605) A scenario with the minimum number of residual sectors in all scenarios is selected, wherein a scenario with the smallest variance of the number of weak coverage grids contained in all the sectors is selected under the condition of the same number of sectors (for example, if two scenarios each have two sectors, the number of weak coverage grids included therein are respectively (2, 2) and (1, 3), and thus the variances are respectively 0 and 1, the scenario (2, 2) is selected as a final scheme); and a scenario with a first cell azimuth closer to 0 degrees is selected under the condition of the same number and variance.
606) The azimuth of the sector is preliminarily adjusted.

Among all the weak coverage grids included in one sector, given that the weak coverage grid with the minimum azimuth is X, and the weak coverage grid with the maximum azimuth is Y:
if Y - X zimuth is Yid with the maximum azimuth is Yct;
if Y-X >180 and (X + Y)/2 ≥ 180, the azimuth of the sector is (X + Y)/2 -180; and
if Y-X >180 and (X + Y)/2 < 180, the azimuth of the sector is (X + Y)/2 + 180.

For example, referring to FIG. 13, for a station on the center grid, two weak coverage grids are included, at angles of 45° and 90°, respectively, and the azimuth of the sector is (45° +90°)/2 =67.5°. A more refined azimuth adjustment further involves inter-cell interference, which is put into operation in a later simulation.

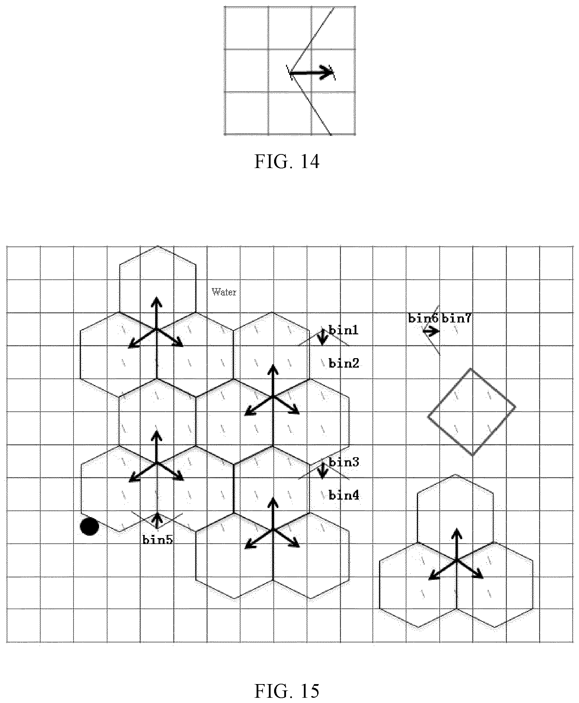

In this embodiment, the coverage stations for bin6 and bin7 are as shown in FIG. 14. One micro station c covers bin6 and bin7 at an azimuth of 90°.

At step 426, the outdoor weak coverage grid list is updated.

In this embodiment, the two weak coverage grids of Region III are eliminated from the list.

At step 427, it is judged whether all candidate sites are traversed or all outdoor weak coverage grids are eliminated, wherein, if not all candidate sites are traversed or all outdoor weak coverage grids or not all outdoor weak coverage grids are eliminated, the process returns to step 423; if all candidate sites are traversed or all outdoor weak coverage grids are eliminated, the process proceeds to step 428.

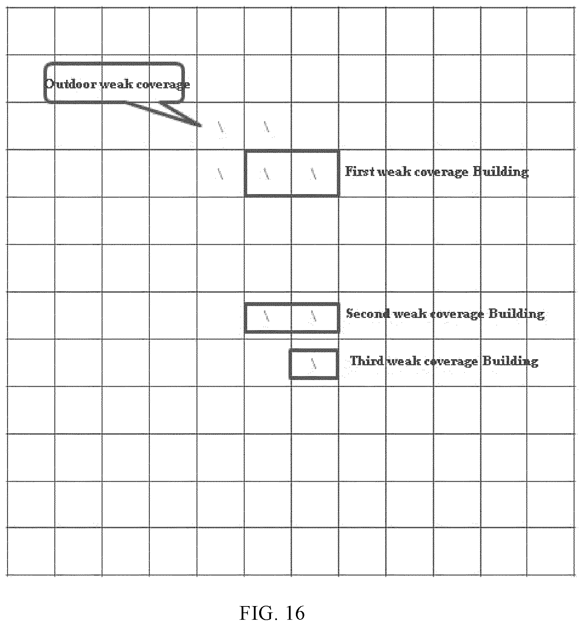

In this embodiment, since bin1 to bin5 are not eliminated, the process returns to step 423. After the iterative operations of steps 423 to 427, bin1 to bin5 are solved by deploying 3 micro stations, as shown in FIG. 16.

At step 428, it is checked whether the outdoor micro station is able to eliminate the weak coverage grids in the building, and it is calculated whether any weak coverage grids is present in the azimuth range of the newly added outdoor micro station according to the number of indoor coverage layers of the station, wherein, if the outdoor micro station is able to eliminate the weak coverage grids in the building, the procedure is ended; if the outdoor micro station is not able to eliminate the weak coverage grids in the building, the process proceeds to step 429.

In this embodiment, the number of indoor coverage layers of the newly added micro station c is 1, and the weak coverage building in FIG. 4 cannot be eliminated. In this case, step 429 needs to be continued.

At step 429, outdoor or indoor micro stations are deployed for the remaining weak coverage buildings.

In the former scenario recognition, some weak coverage buildings are recognized and assigned with a deployed station type, while some may not. Those not recognized are deployed according to a default indoor micro station. If the micro station is an indoor micro station, the number of micro stations is calculated according to a volume of the building and a coverage capacity of the indoor micro station.

In this embodiment, it is determined in step 402 that an indoor micro station d is to be deployed. For example, if the area of a building is 20000 square meters, the coverage area of d is 200 square meters, and each floor has a height of 3 m, then the number of indoor micro stations d to be deployed in the building is about 20000/200/3 ≈ 33. The formula may be adjusted by users according to the conditions of different projects.

In order to facilitate understanding of the deployment process of the outdoor micro station in a weak coverage building, the disclosure provides another embodiment related to a base station deployment method. Referring to FIG. 16, the weak coverage region includes, in addition to an aggregation region, a first weak coverage building (or Building I), a second weak coverage building (or Building II), a third weak coverage building (or Building III), and outdoor weak coverage. The grid accuracy is 50 meters. If the designated base station type is outdoor micro station, station deployment is performed on the candidate sites of the outdoor micro station closest to the indoor weak coverage grids in sequence.

The station types assigned for the three indoor weak coverage buildings are as follows:

| Region(s) | Scenario | Industry classification in Baidu | Matched station type |
|---|---|---|---|
| First weak coverage building | Commercial area | Office building | Indoor micro station d |
| Second weak coverage building | Residential area | Lodging area and dormitory | Outdoor micro station b |
| Third weak coverage building | Residential area | Lodging area and dormitory | Outdoor micro station b |

The outdoor weak coverage grid is deployed with an outdoor micro station b.

For example, the first weak coverage building has an area of 5000 square meters, and a height of 50 meters.

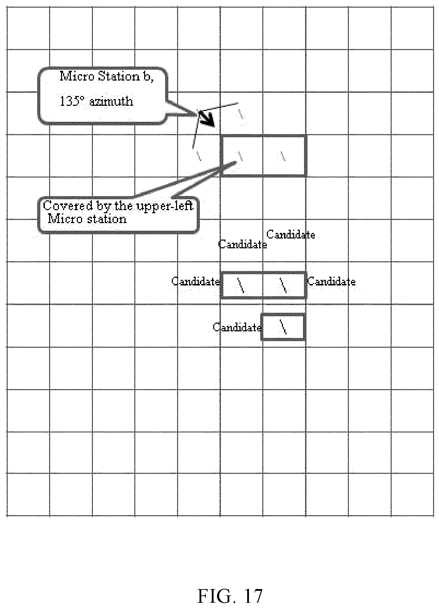

In this embodiment, the macro station deployment may be completed for the aggregation region with reference to steps 401 to 418. if no region without a deployed macro station is present, the three outdoor weak coverage grids are deployed with a micro station b. For the specific procedure of deploying the outdoor weak coverage grid with the micro station b, reference may be made to the above embodiments, and the final deployment location is as shown in FIG. 17. Specifically, it may be checked according to step 428 and obtained that a grid to the left of the first weak coverage building can be eliminated by the micro station deployed thereon, as shown in FIG. 17. According to step 429, the first weak coverage building contains 2 grids in total, and 1 weak coverage grid has not been eliminated yet. In total, the proportion of the residual weak coverage grids is 1/2, the residual weak coverage area is 5000×1/2≈/2id has not been e and the number of indoor micro stations d to be deployed is 2500/200/3≈4.

The following description specifically describes the deployment of outdoor micro stations b for the second and third weak coverage buildings. The specific operation steps of the deployment are as follows:
At step 501, all weak coverage buildings are ranked by area from large to small, and if the areas are equal, a deployment is randomly selected.

In this embodiment, the second weak coverage building has a larger area than the third weak coverage building, so the procedure starts from the second weak coverage building.

At step 502, a candidate site for outdoor micro stations in the current building is screened.

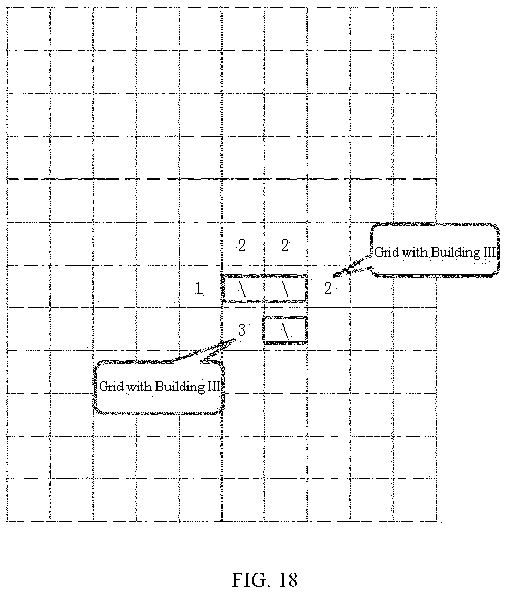

The step 502 includes: selecting, among a circle of grids around the building, all outdoor grids or grids where a building with a height less than 30 meters is located as candidate sites, and further screening out a candidate site according to the rules in the above step 407, as shown in FIG. 18. Since the height of the third weak coverage building is greater than 30 meters, the grid where the building is located is not used as a candidate site.

At step 503, it is judged whether the candidate site is empty or the building weak coverage grid is empty, wherein if the candidate site is empty, the process turns to step 506; otherwise, turns to step 504.

In this embodiment, this iteration is not empty, and the operation proceeds to step 504.

At step 504, an attempt is made to deploy a station at all candidate sites and the eliminated weak coverage grid is calculated.

The eliminated weak coverage grid here also includes other neighboring weak coverage buildings. The number of indoor coverage layers of the outdoor micro station b is 1. Thus, a nine-block station deployment is performed on each candidate site in FIG. 17. As shown in FIG. 18, the number of weak coverage grids eliminated by the respective sites is 1, 2, 2, 2, and 3, respectively, wherein two sites eliminated weak coverage grids including one grid of the third weak coverage building.

At step 505, a candidate site is selected as a newly added site, and the weak coverage grid list is updated.

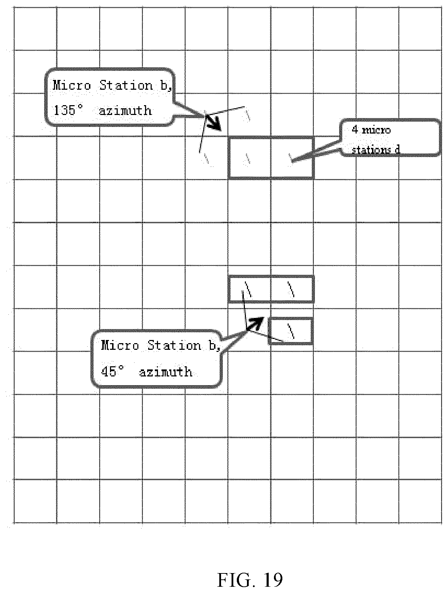

A candidate site with the maximum number of eliminated weak coverage grids is selected as a newly added station, while the number and azimuths of micro stations to be arranged in the block range according to the mode of step 425 are calculated. In this embodiment, a site with 3 eliminated weak coverage grids is selected, while a micro station b with an azimuth of 45° is deployed, as shown in FIG. 19. After this iteration is complete, the operation returns to step 503. Since all the weak coverage grids in Building II are eliminated, the operation proceeds to step 506.

At step 506, the weak coverage building list is updated. The weak coverage building of this iteration is removed from the list while it is checked whether any neighboring weak coverage building is also eliminated. If any, it is also removed from the list. In this embodiment, both Buildings II and III are eliminated from the list.

At step 507, it is checked whether the weak coverage building list is empty, wherein if the weak coverage building list is not empty, returning to step 501; and if the weak coverage building list is empty, the station addition procedure of outdoor micro stations for covering the indoor weak coverage is finished.

The present embodiment has traversed all buildings and thus the procedure is ended. The final deployment of base station sites is as shown in FIG. 19.

In summary, during the process of base station deployment for the weak coverage region, the base station deployment method according to the embodiments of the present disclosure can provide a macro-micro cooperated and indoor-outdoor comprehensive solution, completing the task in one step with high applicability. Meanwhile, in the base station deployment method according to the embodiments of the disclosure, the most effective station addition location can be automatically searched by a program, a plurality of base station deployment schemes can be established by selecting different base station sites, and then the optimal base station deployment scheme is selected from the plurality of base station deployment schemes for base station deployment so that the most weak coverage grids can be eliminated by the least number of stations, and the effectiveness as well as efficiency of the base station deployment can be improved.

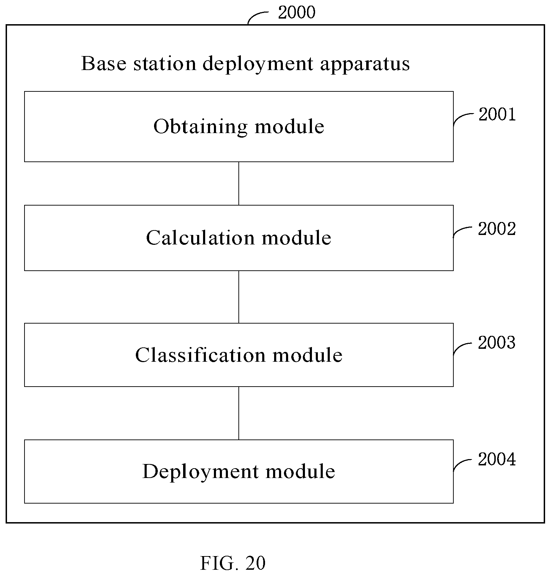

FIG. 20 is a schematic structural diagram of a base station deployment apparatus according to an embodiment of the present disclosure. Referring to FIG. 20, the base station deployment apparatus 2000 includes: an obtaining module 2001, a calculation module 2002, a classification module 2003 and a deployment module 2004.

The obtaining module 2001 is configured to obtain deployment parameters for base station deployment and measurement report data sent from a terminal.

The calculation module 2002 is configured to obtain a weak coverage region according to the measurement report data.

The classification module 2003 is configured to classify the weak coverage region to obtain a type of the weak coverage region.

Optionally, the classification module 2003 includes: a classification unit.

The classification unit is configured to perform scenario classification on the weak coverage region according to at least one of point of interest information and the number of weak coverage grids of the weak coverage region, so as to obtain the type of the weak coverage region.

The deployment module 2004 is configured to perform base station deployment on the weak coverage region according to the type of the weak coverage region, a preset correspondence relationship between the type of the weak coverage region and the type of the base station, and the deployment parameters.

Optionally, if the weak coverage region includes a first region where the number of weak coverage grids reaches a first threshold, wherein the first region includes at least one sub-region, the deployment module 2004 includes: a first determination unit, a first ranking unit, a first deployment unit and a first judgement unit.

The first determination unit is configured to determine that a base station type of the first region is macro base station according to the type of the weak coverage region, the preset correspondence relationship between the type of the weak coverage region and the type of the base station.

The first ranking unit is configured to prioritize the at least one sub-region of the first region to obtain a sub-region with the highest priority.

The first deployment unit is configured to perform macro base station deployment on the sub-region with the highest priority according to a coverage radius of the macro base station in the deployment parameters.

The first judgement unit is configured to judge whether a sub-region without a deployed macro base station is present in the first region. If a sub-region without a deployed macro base station is present in the first region, the first ranking unit is triggered to prioritize the at least one sub-region of the first region to obtain a sub-region with the highest priority.

Optionally, the first deployment unit further includes: a first calculation subunit, a first deployment subunit, a second calculation subunit, a first deletion subunit, a first statistics subunit, a second deployment subunit, a third calculation subunit, a second deletion subunit, a second statistics subunit, a first selection subunit and a third deployment subunit.

The first calculation subunit is configured to calculate a first base station site of the sub-region with the highest priority.

The first deployment subunit is configured to establish, with the first base station site as a starting point, a first macro base station deployment scheme for the sub-region with the highest priority using a cellular structure according to the coverage radius of the macro base station in the deployment parameters.

The second calculation subunit is configured to calculate the number of weak coverage grids eliminated by each deployed macro base station in the first macro base station deployment scheme under the condition that no deployed macro base station at an improper location is present in the first macro base station deployment scheme.

The first deletion subunit is configured to delete a deployed macro base station which eliminates weak coverage grids by a number less than a second threshold to obtain a second macro base station deployment scheme for the sub-region with the highest priority.

The first statistics subunit is configured to count the number of sites of deployed macro base stations and the total number of eliminated weak coverage grids in the second macro base station deployment scheme.

The second deployment subunit is configured to sequentially take other locations except for the first base station site in the sub-region with the highest priority as the starting point, and establish a third macro station deployment scheme for the sub-region with the highest priority using a cellular structure according to the coverage radius of the macro base station.

The third calculation subunit is configured to calculate the number of weak coverage grids eliminated by each deployed macro base station in the third macro station deployment scheme under the condition that no deployed macro base station at an improper location is present in the third macro station deployment scheme.

The second deletion subunit is configured to delete a deployed macro base station in the third macro station deployment scheme which eliminates weak coverage grids by a number less than a third threshold to obtain a fourth macro base station deployment scheme for the sub-region with the highest priority.

The second statistics subunit is configured to count the number of sites of deployed macro base stations and the total number of eliminated weak coverage grids in the fourth macro base station deployment scheme.

The first selection subunit is configured to select an optimal deployment scheme from the second macro base station deployment scheme and the fourth macro base station deployment scheme according to the number of sites of deployed macro base station sites and the total number of weak coverage elimination grids of the second macro base station deployment scheme and the number of sites of deployed macro base station sites and the total number of weak coverage elimination grids of the fourth macro base station deployment scheme.

The third deployment subunit is configured to perform macro base station deployment on the sub-region with the highest priority according to the optimal deployment scheme.

Optionally, if no sub-region without a deployed macro station is present in the first region, and the weak coverage region further includes at least one second region where the number of weak coverage grids fails to reach a first threshold, wherein the second region includes a weak coverage grid uncovered by a coverage area of the deployed macro base station in the first region. At this time, the deployment module 2004 further includes: a second determination unit, a first calculation unit, a first obtaining unit, a second ranking unit, a third determination unit, a second deployment unit and a second judgement unit.

The second determination unit is configured to determine that a base station type of the second region is micro base station according to the type of the weak coverage region, the preset correspondence relationship between the type of the weak coverage region and the type of the base station.

The first calculation unit is configured to calculate the maximum number of coverage layers of the micro base station according to a coverage radius of the micro base station in the deployment parameters.

The first obtaining unit is configured to obtain candidate sites corresponding to the weak coverage grids in the second region.

The second ranking unit is configured to prioritize the candidate sites of the second region to obtain a candidate site with the highest priority.

The third determination unit is configured to determine the type of the micro base station and the number of micro base stations deployed at the candidate site with the highest priority according to the maximum number of coverage layers of the micro base station.

The second deployment unit is configured to perform micro base station deployment at the candidate site with the highest priority according to the type of the micro base station and the number of micro base stations deployed at the candidate site with the highest priority.

The second judgement unit is configured to judge whether a region without a deployed micro base station is present in the second region, wherein if the region without a deployed micro base station is present in the second region, the second ranking unit is triggered to prioritize the candidate sites of the second region to obtain a candidate site with the highest priority.

Optionally, assuming that an antenna of the micro base station is deployed in a central layer of the maximum number of coverage layers, the third determination unit includes: a first judgement subunit, a third deployment subunit, a fourth deployment subunit, a second judgement subunit, a merging subunit, a third statistics subunit, a second selection subunit, a first determination subunit and a fifth deployment subunit.

The first judgement subunit is configured to judge whether weak coverage grids are present only in the central layer of the maximum number of coverage layers.

The third deployment subunit is configured to deploy one micro base station in the central layer of the maximum number of coverage layers under the condition that weak coverage grids are present only in the central layer of the maximum number of coverage layers.

The fourth deployment subunit is configured to deploy three sectors in the central layer of the maximum number of coverage layers under the condition that weak coverage grids are present not only in the central layer of the maximum number of coverage layers, and rotate the three sectors according to a plurality of preset angles to form a plurality of scenarios, in each of the scenarios the three sectors corresponding to different azimuths.

The second judgement subunit is configured to sequentially judge in all scenarios whether the weak coverage grids contained in adjacent sectors are able to be covered by one sector under the condition that weak coverage grids are present in coverage areas of all sectors in all scenarios.

The merging subunit is configured to merge the adjacent sectors under the condition that weak coverage grids contained in adjacent sectors in a certain scenario are able to be covered by one sector.

The third statistics subunit is configured to count the number of micro base stations corresponding to the number of sectors in each of the scenarios.

The second selection subunit is configured to select an optimal scenario from all the scenarios according to the number of micro base stations of the scenarios.

The first determination subunit is configured to determine an azimuth of each of the sectors.

The fifth deployment subunit is configured to perform micro base station deployment according to the azimuths of the sectors and the optimal scenario.

Optionally, if no region without a deployed micro base station is present in the second region, the weak coverage region further includes at least one weak coverage building. At this time, the deployment module 2004 further includes: a third judgement unit. a third ranking unit, a second obtaining unit, a fourth judgement unit, a third deployment unit, a second calculation unit, a fifth judgement unit, a fourth deployment unit, a third calculation unit, a first selection unit, a fourth calculation unit, a fifth deployment unit and a sixth judgement unit.

The third judgement unit is configured to judge whether a coverage area of the deployed micro base station is able to cover weak coverage grids in the weak coverage buildings.

The third ranking unit is configured to prioritize the weak coverage buildings to obtain a weak coverage building with the highest priority under the condition that a coverage area of the deployed micro base station cannot cover weak coverage grids in the weak coverage buildings.

The second obtaining unit is configured to obtain a second candidate site in the weak coverage building with the highest priority.

The fourth judgement unit is configured to judge whether a weak coverage grid corresponding to the weak coverage region includes the second candidate site.

The third deployment unit is configured to establish a first micro base station deployment scheme at the second candidate site under the condition that the weak coverage grid corresponding to the weak coverage region includes the second candidate site.

The second calculation unit is configured to calculate the number of weak coverage grids eliminated by the micro base station deployed at the second candidate site.

The fifth judgement unit is configured to select a third candidate site as a newly added station, and judging whether the weak coverage grid corresponding to the weak coverage region includes the third candidate site.

The fourth deployment unit is configured to establish a second micro base station deployment scheme at the third candidate site under the condition that the weak coverage grid corresponding to the weak coverage region includes the third candidate site.

The third calculation unit is configured to calculate the number of weak coverage grids eliminated by the micro base station deployed at the third candidate site.

The first selection unit is configured to select a candidate site corresponding to the optimal micro base station deployment scheme from the first micro base station deployment scheme and the second micro base station deployment scheme according to the number of weak coverage grids eliminated by the micro base station deployed at the third candidate site and by the micro base station deployed at the second candidate site.

The fourth calculation unit is configured to calculate the number of micro stations to be deployed in the weak coverage buildings.

The fifth deployment unit is configured to perform micro base station deployment at the optimal candidate site in the weak coverage buildings according to the number of micro stations to be deployed in the weak coverage buildings.

The sixth judgement unit is configured to judge whether a weak coverage building without a deployed micro base station is present in the weak coverage region, wherein if a weak coverage building without a deployed micro base station is present in the weak coverage region, the third ranking unit is triggered to prioritize the weak coverage buildings to obtain a weak coverage building with the highest priority.

It should be noted that the base station deployment apparatus according to the embodiments of the present disclosure is capable of implementing the respective steps of the foregoing base station deployment method, which is not repeated herein.

Firstly, in the base station deployment apparatus as described above, base station deployment may be performed on the weak coverage region according to the type of the weak coverage region, a preset correspondence relationship between the type of the weak coverage region and the type of the base station, and the deployment parameters, wherein the type of the weak coverage region may be identified according to the POI database, and a designated suitable type of base station is determined according to the type of the weak coverage region, and a preset correspondence relationship between the type of the weak coverage region and the type of the base station. In the way, the base station deployment apparatus according to the embodiments of the present disclosure can automatically carry out scenario recognition according to the actual region characteristics, thereby providing a matched station deployment scheme and improving accuracy of the scheme. Meanwhile, the base station deployment apparatus according to the embodiments of the disclosure can further automatically complete all operations through programs, thereby improving the work efficiency while reducing errors due to insufficient experience when a planning engineer performs subjective judgment.

Secondly, during the process of base station deployment for the weak coverage region, the base station deployment apparatus according to the embodiments of the disclosure can provide a macro-micro cooperated and indoor-outdoor comprehensive solution, complete the task in one step and is highly applicable.

Thirdly, the base station deployment apparatus according to the embodiments of the disclosure can automatically search the most effective station addition location by a program, establish a plurality of base station deployment schemes by selecting different base station sites, and then select the optimal base station deployment scheme from the plurality of base station deployment schemes for base station deployment so that the most weak coverage grids can be eliminated by the least number of stations, and the effectiveness as well as efficiency of the base station deployment can be improved.

To facilitate understanding of the configuration of the above base station deployment apparatus, the following description will be made with reference to examples.

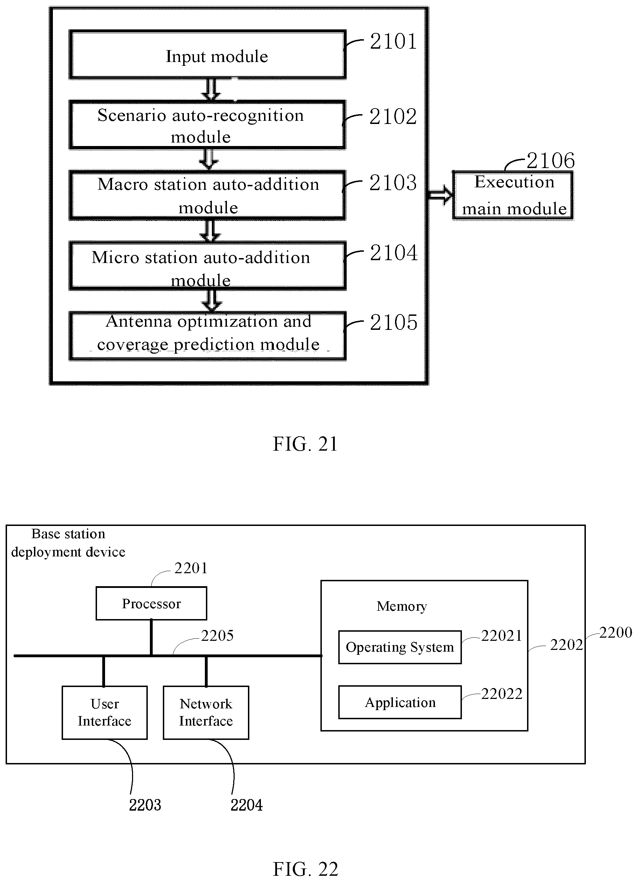

FIG. 21 is a schematic structural diagram of another base station deployment apparatus according to an embodiment of the present disclosure. The base station deployment apparatus includes: an input module 2101, a scenario auto-recognition module 2102, a macro station auto-addition module 2103, a micro station auto-addition module 2104, an antenna optimization and coverage prediction module 2105 and an execution main module 2106.

The input module 2101 inputs contents as follows:
(1) a list of all weak coverage grids analyzed from MR data, including both outdoor and indoor tables, wherein each grid contains a feature attribute, such as a water area, a building, vegetation, and the like;
(2) an aggregation region calculated from the weak coverage grids as described above (the aggregation region is generated by the weak coverage grids according to the proximity relation using an aggregation algorithm. For example, all neighboring weak coverage grids are considered to be in the same region, and non-neighboring grids are in different regions. Typically, adjacent weak coverage grids are output as an aggregation region only after the number of weak coverage grids in the region reaches a certain threshold. Thus, there may be scattered weak coverage grids that fail to aggregate. The aggregation region is divided into outdoor and indoor regions as well. In later procedures, macro station deployment is attempted only in the aggregation region. Thus, aggregation and macro station deployment typically happen only in a region with denser weak coverage grids. This is actually a judgment of the deployment scenario of macro stations);
(3) a list of buildings with weak coverage, i.e., an indoor weak coverage region, wherein information about the location, contour and height of the buildings are extracted from a three-dimensional electronic map (an electronic map containing altitude, feature information, building contour and height information);
(4) a user-defined building scenario matching table: an industry classification in the POI database, a correspondence relationship table between the building scenarios and types of the stations (for example, a user-defined "residential area" scenario corresponds to industry classifications "residence" and "dormitory" in the Baidu POI information, and meanwhile, a certain type of station is designated to be deployed for the scenario of "residential area");
(5) design parameters for automatic station addition, including an equipment type of the newly built station, a design radius of the station, a nearest distance between stations, the minimum number of girds covered by the newly added macro station, and the like (the user needs to assign a coverage radius to each aggregation region and grid, the assignment mode supports unified assignment of the whole network and different values assigned to different sub-regions); and
(6) latitude and longitude of the macro and micro stations in the current network.

The scenario auto-recognition module 2102 is configured to recognize a building scenario according to the POI database, and assign a station type to the building by searching a matching relationship table between the building scenarios and the station type, wherein the station type includes macro station, outdoor micro station and indoor micro station.

The macro station auto-addition module 2103 is configured to automatically perform macro station deployment for a weak coverage region suitable for macro station deployment to eliminate weak coverage grids.

The micro station auto-addition module 2104 is configured to automatically perform micro station deployment for all the remaining weak coverage grids to eliminate weak coverage grids.

The antenna optimization and coverage prediction module 2105 is configured to perform antenna parameter adjustment, coverage strength and quality prediction on the newly added macro and micro stations, and output the overall coverage strength and quality of the network after adding the stations.

The execution main module 2106 is configured to call the above modules to complete the entire procedure of the program.

The respective modules have the following relationships: the modules 2101 to 2105 sequentially call the results output by the previous modules, and the execution main module 2106 calls all the modules as described above.

FIG. 22 is a schematic structural diagram of a base station deployment apparatus according to another embodiment of the present disclosure. As shown in FIG. 22, the base station deployment device 2200 shown in FIG. 22 includes: at least one processor 2201, a memory 2202, at least one network interface 2204 and a user interface 2203. The various components of the base station deployment device 2200 are coupled together by a bus system 2205. It is understood that the bus system 2205 is configured to enable connective communication between these components. The bus system 2205 includes, in addition to a data bus, a power bus, a control bus, and a status signal bus. However, for clarity of illustration, the various busses are shown jointly in Fig. 22 as the bus system 2205.

The user interface 2203 may include a display, a keyboard or a pointing device (e.g., a mouse, a track ball, a touchpad, or a touch screen, among others). It will be appreciated that the memory 2202 in the embodiment of the disclosure may be either a volatile memory or a nonvolatile memory, or may include both volatile and nonvolatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM) used as an external cache. By way of example but not limitation, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The memory 2202 described in the embodiments of this disclosure is intended to include, but not limited to, these and any other suitable types of memories.

In some implementations, the memory 2202 stores elements as follows: executable modules or data structures, or subsets thereof, or extended sets thereof, and an operating system 22021 and an application 22022.

The operating system 22021 includes various system programs such as a framework layer, a core library layer and a driving layer, which are configured to implement various basic services and process hardware-based tasks. The application 22022 includes various applications such as a media player and a browser, which are configured to implement various application services. A program for implementing the methods in the embodiments of the disclosure can be included in an application 22022.

In an embodiment of the present disclosure, by calling the program or instruction stored on the memory 2202, which may be specifically a program or instruction stored on the application 22022, the processor 2201 may execute the above base station deployment method.

The method disclosed in the embodiments of the disclosure can be applied to or implemented by the processor 2201. The processor 2201 may be an integrated circuit chip capable of signal processing. In implementation, the steps of the above method may be implemented by an integrated logic circuit in hardware or instructions in software in the processor 2201. The processor 2201 may be a Digital Signal Processor (DSP), an Application Specific Integrated Circuit (ASIC), a Field Programmable Gate Array (FPGA) or other programmable logic devices, discrete gates or transistor logic devices, or discrete hardware components that may implement or perform the methods, steps, and logic blocks in embodiments of the present disclosure. The various methods, steps, and logic blocks disclosed in the embodiments of the present disclosure may be implemented or performed. The general purpose processor may be a microprocessor or the processor may be any conventional processor or the like. The steps of the method disclosed in the embodiments of the present disclosure may be directly implemented by a hardware decoding processor, or implemented by a combination of hardware and software modules in the decoding processor. The software module may be located in a storage medium well known in the art, such as an RAM, a flash, an ROM, a PROM or EPROM, a register, or the like. The storage medium is located in the memory 2202, from which the processor 2201 reads information and completes the steps of the above methods in combination with hardware thereof.

It will be appreciated that the embodiments described herein may be implemented in hardware, software, firmware, middleware, microcode, or any combination thereof. For a hardware implementation, the processing unit may be implemented by at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), general purpose processors, controllers, microcontrollers, microprocessors, other electronic units configured to execute the functions of the present applications, or a combination thereof.

For a software implementation, the technology described in the embodiments of the present disclosure may be implemented by modules (such as procedures, functions, and the like) that perform the functions described in the embodiments of the present disclosure. Software codes may be stored in a memory and executed by a processor. The memory may be implemented inside or outside of the processor.

Preferably, the computer program may further implement the following steps when executed by the processor 2201:
obtaining deployment parameters for base station deployment and measurement report data sent from a terminal; obtaining a weak coverage region according to the measurement report data; and performing base station deployment on the weak coverage region according to the type of the weak coverage region, a preset correspondence relationship between the type of the weak coverage region and the type of the base station, and the deployment parameters.

Optionally, the computer program may further implement the following steps when executed by the processor 2201:
determining that a base station type of the first region is macro base station according to the type of the weak coverage region, and the preset correspondence relationship between the type of the weak coverage region and the type of the base station; prioritizing the at least one sub-region of the first region to obtain a sub-region with the highest priority; and performing macro base station deployment on the sub-region with the highest priority according to a coverage radius of the macro base station in the deployment parameters.

Optionally, the computer program may further implement the following steps when executed by the processor 2201:
judging whether a sub-region without a deployed macro base station is present in the first region; and if the sub-region without a deployed macro base station is present in the first region, performing the step of prioritizing on the at least one sub-region of the first region to obtain a sub-region with the highest priority.

Optionally, the computer program may further implement the following steps when executed by the processor 2201:
calculating a first base station site of the sub-region with the highest priority; establishing, with the first base station site as a starting point a first macro base station deployment scheme for the sub-region with the highest priority using a cellular structure according to the coverage radius of the macro base station in the deployment parameters; calculating the number of weak coverage grids eliminated by each deployed macro base station in the first macro base station deployment scheme under the condition that no deployed macro base station at an improper location is present in the first macro base station deployment scheme; deleting a deployed macro base station which eliminates weak coverage grids by a number less than a second threshold to obtain a second macro base station deployment scheme for the sub-region with the highest priority; counting the number of sites of deployed macro base stations and the total number of eliminated weak coverage grids in the second macro base station deployment scheme; sequentially taking other locations except for the first base station site in the sub-region with the highest priority as the starting point, and establishing a third macro station deployment scheme for the sub-region with the highest priority using a cellular structure according to the coverage radius of the macro base station; calculating the number of weak coverage grids eliminated by each deployed macro base station in the third macro station deployment scheme under the condition that no deployed macro base station at an improper location is present in the third macro station deployment scheme; deleting a deployed macro base station in the third macro station deployment scheme which eliminates weak coverage grids by a number less than a third threshold to obtain a fourth macro base station deployment scheme for the sub-region with the highest priority; counting the number of sites of deployed macro base stations and the total number of eliminated weak coverage grids in the fourth macro base station deployment scheme; selecting an optimal deployment scheme from the second macro base station deployment scheme and the fourth macro base station deployment scheme according to the number of sites of deployed macro base stations and the total number of eliminated weak coverage grids in the second and fourth macro base station deployment schemes; and performing macro base station deployment on the sub-region with the highest priority according to the optimal deployment scheme.

Optionally, the computer program may further implement the following steps when executed by the processor 2201:
determining that a base station type of the second region is micro base station according to the type of the weak coverage region, and the preset correspondence relationship between the type of the weak coverage region and the type of the base station; calculating the maximum number of coverage layers of the micro base station according to a coverage radius of the micro base station in the deployment parameters; obtaining candidate sites corresponding to the weak coverage grids in the second region; prioritizing the candidate sites of the second region to obtain a candidate site with the highest priority; determining the type of the micro base station and the number of micro base stations deployed at the candidate site with the highest priority according to the maximum number of coverage layers of the micro base station; and performing micro base station deployment at the candidate site with the highest priority according to the type of the micro base station and the number of micro base stations deployed at the candidate site with the highest priority.

Optionally, the computer program may further implement the following steps when executed by the processor 2201:
judging whether a region without a deployed micro base station is present in the second region; and if the region without a deployed micro base station is present in the second region, performing the step of prioritizing on the candidate sites of the second region to obtain a candidate site with the highest priority.

Optionally, the computer program may further implement the following steps when executed by the processor 2201:
judging whether weak coverage grids are present only in the central layer of the maximum number of coverage layers; if the weak coverage grids are present only in the central layer of the maximum number of coverage layers, deploying one micro base station in the central layer of the maximum number of coverage layers; if the weak coverage grids are present not only in the central layer of the maximum number of coverage layers, deploying three sectors in the central layer of the maximum number of coverage layers, and rotating the three sectors according to a plurality of preset angles to form a plurality of scenarios, in each of the scenarios the three sectors corresponding to different azimuths; sequentially judging in all scenarios whether the weak coverage grids contained in adjacent sectors are able to be covered by one sector under the condition that weak coverage grids are present in coverage areas of all sectors in all scenarios; merging the adjacent sectors under the condition that weak coverage grids contained in adjacent sectors in a certain scenario are able to be covered by one sector; counting the number of micro base stations corresponding to the number of sectors in each of the scenarios; selecting an optimal scenario from all the scenarios according to the number of micro base stations of the scenarios; determining an azimuth of each of the sectors; and performing micro base station deployment according to the azimuths of the sectors and the optimal scenario.

Optionally, the computer program may further implement the following steps when executed by the processor 2201:
judging whether an coverage area of the deployed micro base station is able to cover weak coverage grids in the weak coverage buildings; if the coverage area of the deployed micro base station is not able to cover weak coverage grids in the weak coverage buildings, performing the step of prioritizing on the weak coverage buildings to obtain a weak coverage building with the highest priority; obtaining a second candidate site in the weak coverage building with the highest priority; judging whether a weak coverage grid corresponding to the weak coverage region includes the second candidate site; if the weak coverage grid corresponding to the weak coverage region includes the second candidate site, establishing a first micro base station deployment scheme at the second candidate site; calculating the number of weak coverage grids eliminated by the micro base station deployed at the second candidate site; selecting a third candidate site as a newly added station, and judging whether the weak coverage grid corresponding to the weak coverage region includes the third candidate site; if the weak coverage grid corresponding to the weak coverage region includes the third candidate site, establishing a second micro base station deployment scheme at the third candidate site; calculating the number of weak coverage grids eliminated by the micro base station deployed at the third candidate site; selecting a candidate site corresponding to the optimal micro base station deployment scheme from the first micro base station deployment scheme and the second micro base station deployment scheme according to the number of weak coverage grids eliminated by the micro base station deployed at the third candidate site and by the micro base station deployed at the second candidate site; calculating the number of micro stations to be deployed in the weak coverage buildings; and performing micro base station deployment at the optimal candidate site in the weak coverage buildings according to the number of micro stations to be deployed in the weak coverage buildings.

Optionally, the computer program may further implement the following steps when executed by the processor 2201:
judging whether a weak coverage building without a deployed micro base station is present in the weak coverage region; and if the weak coverage building without a deployed micro base station is present in the weak coverage region, further performing the step of prioritizing on the weak coverage buildings to obtain a weak coverage building with the highest priority.

In this embodiment, the processor 2201 may perform base station deployment on the weak coverage region according to the type of the weak coverage region, a preset correspondence relationship between the type of the weak coverage region and the type of the base station, and the deployment parameters, wherein the type of the weak coverage region may be identified according to the POI database, and a designated suitable type of base station is determined according to the type of the weak coverage region, and a preset correspondence relationship between the type of the weak coverage region and the type of the base station. In the way, the base station deployment apparatus according to the embodiments of the present disclosure can automatically carry out scenario recognition according to the actual region characteristics, thereby providing a matched station deployment scheme and improving accuracy of the scheme. Meanwhile, the processor 2201 according to the embodiments of the disclosure can further automatically complete all operations through programs, thereby improving the work efficiency while reducing errors due to insufficient experience when a planning engineer performs subjective judgment.

Secondly, during the process of base station deployment for the weak coverage region, the processor 2201 according to the embodiments of the disclosure can provide a macro-micro cooperated and indoor-outdoor comprehensive solution, and is highly applicable.

Thirdly, the processor 2201 according to the embodiments of the disclosure can automatically search the most effective station addition location by a program, establish a plurality of base station deployment schemes by selecting different base station sites, and then select the optimal base station deployment scheme from the plurality of base station deployment schemes for base station deployment so that the most weak coverage grids are able to be eliminated by the least number of stations, and the effectiveness as well as efficiency of the base station deployment can be improved.

In an embodiment the present disclosure, there is further provided a computer readable storage medium storing a computer program thereon which, when executed by a processor, implements steps of the base station deployment method as described above.

It will be appreciated that reference throughout the specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, these particular features, structures, or characteristics may be combined in any suitable manner in at least one of embodiments.

In various embodiments of the present disclosure, it will be appreciated that the sequence numbers of the above-mentioned processes do not imply an order of execution, and the order of execution of each process should be determined by their functions and inherent logic, and should not form any limitation to the implementation process of the embodiments of the present disclosure.

In the embodiments provided herein, it will be appreciated that "B corresponding to A" means that B is associated with A and can be determined from A. It will also be appreciated that determining B from A does not mean determining B from A alone, but also determining B from A and /or other information.

In several embodiments provided in the present application, it will be appreciated that the disclosed method and apparatus may be implemented in other manners. For example, the above-described apparatus embodiments are merely illustrative. For example, the division of the units is only one type of logical functional division, and other divisions may be adopted in practical implementations, for example, multiple units or components may be combined or integrated into another system, or some features may be omitted, or not executed. In addition, the shown or discussed mutual coupling or direct coupling or communicative connection may be an indirect coupling or communicative connection via some interfaces, devices or units, and may be in an electrical, mechanical or other form.

In addition, functional units in the embodiments of the present disclosure may be integrated into one processing unit, or each unit may be separately and physically included in a processing unit, or two or more units may be integrated into one unit. The integrated unit as described above may be implemented in the form of hardware, or in the form of hardware plus a software functional unit.

The integrated unit implemented in the form of a software functional unit may be stored on a computer readable storage medium. The software functional unit, stored on a storage medium, includes a plurality of instructions for causing a computer device (which may be a personal computer, a server, or a network side device, etc.) to perform part of the steps of the transceiving method described in the embodiments of the present disclosure. The storage medium mentioned before includes: a U disk, a mobile hard disk, a read-only memory (ROM), a random access memory (RAM), a disk or optical disk, and other media that an store a program code.

The foregoing are preferred implementations of the present disclosure, and it should be noted that modifications and refinements may be made by those skilled in the art without departing from the principles of the disclosure and these modifications and refinements should be considered as within the scope of the disclosure.

## Claims

1. Abase station deployment method, comprising:
obtaining deployment parameters for base station deployment and measurement report data sent from a terminal;
obtaining a weak coverage region according to the measurement report data;
classifying the weak coverage region to obtain a type of the weak coverage region; and
performing base station deployment on the weak coverage region according to the type of the weak coverage region, a preset correspondence relationship between the type of the weak coverage region and a type of the base station, and the deployment parameters.

2. The deployment method according to claim 1, wherein the step of classifying the weak coverage region to obtain the type of the weak coverage region comprises:
performing scenario classification on the weak coverage region according to at least one of point of interest (POI) information and a number of weak coverage grids of the weak coverage region, so as to obtain the type of the weak coverage region.

3. The deployment method according to claim 1, wherein under the condition that the weak coverage region comprises a first region where the number of weak coverage grids reaches a first threshold, the first region including at least one sub-region, the step of performing base station deployment on the weak coverage region according to the type of the weak coverage region, the preset correspondence relationship between the type of the weak coverage region and the type of the base station, and the deployment parameters comprises:
determining that the type of the base station in the first region is macro base station according to the type of the weak coverage region, and the preset correspondence relationship between the type of the weak coverage region and the type of the base station;
prioritizing the at least one sub-region of the first region to obtain a sub-region with the highest priority; and
performing macro base station deployment on the sub-region with the highest priority according to a coverage radius of the macro base station in the deployment parameters.

4. The deployment method according to claim 3, wherein the step of performing base station deployment on the weak coverage region according to the type of the weak coverage region, the preset correspondence relationship between the type of the weak coverage region and the type of the base station, and the deployment parameters further comprises:
judging whether a sub-region without a deployed macro base station is present in the first region; and
if the sub-region without the deployed macro base station is present in the first region, performing the step of prioritizing the at least one sub-region of the first region to obtain the sub-region with the highest priority.

5. The deployment method according to claim 3, wherein the step of performing the macro base station deployment on the sub-region with the highest priority according to the coverage radius of the macro base station in the deployment parameters further comprises:
calculating a first base station site of the sub-region with the highest priority;
establishing, with the first base station site as a starting point, a first macro base station deployment scheme for the sub-region with the highest priority using a cellular structure according to the coverage radius of the macro base station in the deployment parameters;
calculating a number of weak coverage grids eliminated by each deployed macro base station in the first macro base station deployment scheme under the condition that no deployed macro base station at an improper location is present in the first macro base station deployment scheme;
deleting a deployed macro base station which eliminates the weak coverage grids by a number less than a second threshold to obtain a second macro base station deployment scheme for the sub-region with the highest priority;
counting a number of sites of deployed macro base stations and a total number of eliminated weak coverage grids in the second macro base station deployment scheme;
sequentially taking locations except for the first base station site in the sub-region with the highest priority as the starting point, and establishing a third macro station deployment scheme for the sub-region with the highest priority using a cellular structure according to the coverage radius of the macro base station;
calculating a number of weak coverage grids eliminated by each deployed macro base station in the third macro station deployment scheme under the condition that no deployed macro base station at an improper location is present in the third macro station deployment scheme;
deleting a deployed macro base station in the third macro station deployment scheme which eliminates the weak coverage grids by a number less than a third threshold to obtain a fourth macro base station deployment scheme for the sub-region with the highest priority;
counting a number of sites of deployed macro base stations and a total number of eliminated weak coverage grids in the fourth macro base station deployment scheme;
selecting an optimal deployment scheme from the second macro base station deployment scheme and the fourth macro base station deployment scheme according to the number of sites of deployed macro base stations and the total number of eliminated weak coverage grids in the second and fourth macro base station deployment schemes; and
performing the macro base station deployment on the sub-region with the highest priority according to the optimal deployment scheme.

6. The deployment method according to claim 3, wherein under the condition that no sub-region without a deployed macro station is present in the first region, and the weak coverage region further comprises at least one second region where the number of weak coverage grids fails to reach the first threshold, the second region including a weak coverage grid uncovered by a coverage area of the deployed macro base station in the first region, the step of performing base station deployment on the weak coverage region according to the type of the weak coverage region, the preset correspondence relationship between the type of the weak coverage region and the type of the base station, and the deployment parameters further comprises:
determining that the type of the base station in the second region is micro base station according to the type of the weak coverage region, and the preset correspondence relationship between the type of the weak coverage region and the type of the base station;
calculating a maximum number of coverage layers of the micro base station according to a coverage radius of the micro base station in the deployment parameters;
obtaining candidate sites corresponding to the weak coverage grids in the second region;
prioritizing the candidate sites of the second region to obtain a candidate site with the highest priority;
determining a type of the micro base station and a number of micro base stations deployed at the candidate site with the highest priority according to the maximum number of coverage layers of the micro base station; and
performing micro base station deployment at the candidate site with the highest priority according to the type of the micro base station and the number of micro base stations deployed at the candidate site with the highest priority.

7. The deployment method according to claim 6, wherein the step of performing the base station deployment on the weak coverage region according to the type of the weak coverage region, the preset correspondence relationship between the type of the weak coverage region and the type of the base station, and the deployment parameters further comprises:
judging whether a region without a deployed micro base station is present in the second region; and
if the region without the deployed micro base station is present in the second region, performing the step of prioritizing the candidate sites of the second region to obtain a candidate site with the highest priority.

8. The deployment method according to claim 6, wherein an antenna of the micro base station is deployed in a central layer of the maximum number of coverage layers, and
the step of determining the number of micro base stations deployed at the candidate site with the highest priority according to the maximum number of coverage layers of the micro base station comprises:
judging whether weak coverage grids is present only in the central layer of the maximum number of coverage layers;
if the weak coverage grids is only present in the central layer of the maximum number of coverage layers, deploying one micro base station in the central layer of the maximum number of coverage layers;
if weak coverage grids is not only present in the central layer of the maximum number of coverage layers, deploying three sectors in the central layer of the maximum number of coverage layers, and rotating the three sectors according to a plurality of preset angles to form a plurality of scenarios, the three sectors corresponding to different azimuths in each of the scenarios;
sequentially judging in all scenarios whether the weak coverage grids contained in adjacent sectors are able to be covered by one sector under the condition that weak coverage grids are present in coverage areas of all sectors in all scenarios;
merging the adjacent sectors under the condition that weak coverage grids contained in adjacent sectors in a certain scenario are able to be covered by one sector;
counting a number of micro base stations corresponding to the number of sectors in each of the scenarios;
selecting an optimal scenario from all the scenarios according to the number of micro base stations of the scenarios;
determining an azimuth of each of the sectors; and
performing micro base station deployment according to the azimuths of the sectors and the optimal scenario.

9. The deployment method according to claim 7, wherein under the condition that no region without a deployed micro base station is present in the second region, and the weak coverage region further includes at least one weak coverage building, the step of performing the base station deployment on the weak coverage region according to the type of the weak coverage region, the preset correspondence relationship between the type of the weak coverage region and the type of the base station, and the deployment parameters further comprises:
judging whether a coverage area of the deployed micro base station is able to cover weak coverage grids in the weak coverage building;
if the coverage area of the deployed micro base station is not able to cover weak coverage grids in the weak coverage buildings, prioritizing the weak coverage buildings to obtain a weak coverage building with the highest priority;
obtaining a second candidate site in the weak coverage building with the highest priority;
judging whether a weak coverage grid corresponding to the weak coverage region includes the second candidate site;
if the weak coverage grid corresponding to the weak coverage region includes the second candidate site, establishing a first micro base station deployment scheme at the second candidate site;
calculating a number of weak coverage grids eliminated by the micro base station deployed at the second candidate site;
selecting a third candidate site as a newly added station, and judging whether the weak coverage grid corresponding to the weak coverage region includes a third candidate site;
if the weak coverage grid corresponding to the weak coverage region includes the third candidate site, establishing a second micro base station deployment scheme at the third candidate site;
calculating a number of weak coverage grids eliminated by the micro base station deployed at the third candidate site;
selecting a candidate site corresponding to the optimal micro base station deployment scheme from the first micro base station deployment scheme and the second micro base station deployment scheme according to the number of weak coverage grids eliminated by the micro base station deployed at the third candidate site and eliminated by the micro base station deployed at the second candidate site;
calculating a number of micro stations to be deployed in the weak coverage buildings; and
performing micro base station deployment at the optimal candidate site in the weak coverage buildings according to the number of micro stations to be deployed in the weak coverage buildings.

10. The deployment method according to claim 9, wherein the step of performing the base station deployment on the weak coverage region according to the deployment parameters and the type of the weak coverage region further comprises:
judging whether a weak coverage building without a deployed micro base station is present in the weak coverage region; and
if the weak coverage building without a deployed micro base station is present in the weak coverage region, performing the step of prioritizing the weak coverage buildings to obtain the weak coverage building with the highest priority.

11. Abase station deployment apparatus, comprising:
an obtaining module configured to obtain deployment parameters for base station deployment and measurement report data sent from a terminal;
a calculation module configured to obtain a weak coverage region according to the measurement report data;
a classification module configured to classify the weak coverage region to obtain a type of the weak coverage region; and
a deployment module configured to perform base station deployment on the weak coverage region according to the type of the weak coverage region, a preset correspondence relationship between the type of the weak coverage region and the type of the base station, and the deployment parameters.

12. The deployment apparatus according to claim 11, wherein the classification module comprises:
a classification unit configured to perform scenario classification on the weak coverage region according to at least one of point of interest (POI) information and a number of weak coverage grids of the weak coverage region, so as to obtain the type of the weak coverage region.

13. Abase station deployment device, comprising: a memory, a processor, and a computer program stored in the memory and executable by the processor, wherein the processor executes the computer program to implement the steps of the base station deployment method according to any one of claims 1 to 10.

14. A computer readable storage medium having a computer program stored thereon, wherein the computer program, when executed by a processor, implements the steps of the base station deployment method according to any one of claims 1 to 10.
